# EUROPÄISCHE PATENTSCHRIFT

(11) **EP 4 228 416 B1**
(45) Veröffentlichungstag und Bekanntmachung des Hinweises auf die Patenterteilung: **09.04.2025**
(21) Anmeldenummer: 20796530.2
(22) Anmeldetag: 19.10.2020
(51) Int. Cl.: A22C 25/16

(54) **VORRICHTUNG UND VERFAHREN ZUR AUTOMATISCHEN GEWINNUNG VON FLEISCH VON GEKÖPFTEN UND ENTWEIDETEN FISCHEN**
APPARATUS AND METHOD FOR AUTOMATICALLY RECOVERING FLESH FROM BEHEADED AND EVISCERATED FISH
DISPOSITIF ET PROCÉDÉ POUR L'EXTRACTION AUTOMATIQUE DE LA CHAIR DE POISSONS ÉTETÉS ET ÉVISCÉRÉS

(43) Veröffentlichungstag der Anmeldung: 23.08.2023
(73) Patentinhaber: NORDISCHER MASCHINENBAU RUD. BAADER GMBH + CO KG, 23560 Lübeck (DE)
(72) Erfinder: PAGELS, Mirko, 23560 Lübeck (DE); KRAHN, Valeri, 23560 Lübeck (DE); GÜTTE, Ulrich, 23560 Lübeck (DE)
(74) Vertreter: Stork Bamberger Patentanwälte PartmbB
(86) Internationale Anmeldenummer: PCT/EP2020/079396
(87) Internationale Veröffentlichungsnummer: WO 2022/083848

(56) Entgegenhaltungen:
- WO-A1-2011/151221
- WO-A1-2021/110672
- DE-A1- 19 745 891
- DE-C- 943 612
- GB-A- 1 100 146

## Beschreibung

Die vorliegende Erfindung betrifft eine Vorrichtung zur automatischen Gewinnung von Fleisch von geköpften und entweideten Fischen, umfassend eine Transporteinrichtung zum Transportieren der Fische in Transportrichtung T entlang eines Transportpfads, eine Messeinrichtung zum Erfassen der Fischanatomie der Fische sowie eine Löseeinrichtung zum Lösen des Fleisches vom Grätengerüst, wobei die Löseeinrichtung mindestens zwei rotierend angetriebene und steuerbewegliche Kreismesser aufweist, die auf einander gegenüberliegenden Seiten des Transportpfads zur Bildung eines Spalts S beabstandet zueinander angeordnet sind.

Des Weiteren betrifft die Erfindung ein Verfahren zur automatischen Gewinnung von Fleisch von geköpften und entweideten Fischen, umfassend die Schritte: Transportieren der Fische in Transportrichtung T entlang eines Transportpfads mittels einer Transporteinrichtung, Erfassen der Fischanatomie, insbesondere der Höhe, der Länge und/oder der Breite der Fische, mittels einer Messeinrichtung, Lösen des Fleisches vom Grätengerüst mittels einer Löseeinrichtung, wobei die Löseeinrichtung mindestens zwei rotierend angetriebene und steuerbewegliche Kreismesser aufweist, die auf einander gegenüberliegenden Seiten des Transportpfads zur Bildung eines Spalts S beabstandet zueinander angeordnet sind.

Derartige Vorrichtungen und Verfahren kommen beispielsweise beim Ausführen von Messerschnitten während des automatischen Filetierens von Fischen zum Einsatz. In der fischverarbeitenden Industrie werden derartige Vorrichtungen und Verfahren im Speziellen dazu genutzt, das Fleisch bzw. die Filets oder mindestens Teile davon von geköpften und mindestens teilweise bzw. überwiegend entweideten Fischen zu gewinnen. Anders ausgedrückt sind die erwähnten Vorrichtungen und Verfahren Grundlage bzw. Bestandteil der Filetgewinnung bei entweideten und geköpften Fischen. Dazu werden die Fische automatisch bauchseitig und/oder rückenseitig bearbeitet, indem das am Grätengerüst anliegende Fleisch von diesem durch Löseeinrichtungen gelöst und abgelöst wird. Die Fische werden derartigen Löseeinrichtungen in der Regel kopfvoraus oder schwanzvoraus mittels Transporteinrichtungen zugeführt, alternativ ist grundsätzlich auch ein seitliches Transportieren der Fische möglich. Die bereits geköpften, geschlachteten und in ihrer Bauchhöhle geöffneten Fische werden zu den für den Filetiervorgang benötigten einzelnen Bearbeitungsstationen gefördert und durchlaufen dabei in der Regel mindestens zwei unterschiedliche Löseeinrichtungen zur Ausführung von Messerschnitten, um entsprechend als Resultat das Fleisch der Fische zu gewinnen.

In der DE 198 81 497 C1 ist eine Vorrichtung zur Gewinnung von Fleisch von geköpften und entweideten Fischen beschrieben. Diese Vorrichtung bedient sich zur Gewinnung von Fleisch von geköpften und entweideten Fischen einer schwenkbaren bzw. kippbaren Einstellmöglichkeit der Kreismesser, um den Abstand der Kreismesser bei der Einrichtung der Vorrichtung zueinander variabel einstellen zu können. Dazu sind die Kreismesser in der Ausrichtung um ihre im Wesentlichen horizontale Achse veränderbar. In Transportrichtung T der Fische gesehen können die Kreismesser somit aus einer parallelen Anordnung, bei der die Kreismesser an jedem Punkt des Umfangs den gleichen Abstand zueinander aufweisen, in eine V-förmige Position, bei der die Kreismesser beispielsweise an ihrem tiefsten Messerpunkt den geringsten Abstand zueinander aufweisen, und zurück geschwenkt bzw. gekippt werden. Durch die Schwenkbarkeit der Kreismesser ist der Winkel beider Kreismesser zueinander variabel, jedoch ist die Schnittführung durch den veränderbaren Winkel in Abhängigkeit des Abstands der Kreismesser zueinander beschränkt. Es besteht der weitere Nachteil, dass der Abstand der beiden Kreismesser im Bereich des geringsten Spaltabstandes, üblicherweise am tiefsten Messerpunkt der beiden Kreismesser, auf ein festes, für unterschiedliche Fischgrößen passendes Mindest-Spaltmaß fest einzustellen ist. Mit anderen Worten ist die Stellung/Ausrichtung der Kreismesser zueinander während des Löse- bzw. Schneidvorgangs bezogen auf die Lage des Punktes des geringsten Abstandes unveränderlich. Eine komfortable, automatische und kurzfristige Änderung des Abstands ist auf diesem Wege nicht gegeben. Durch den Stand der Technik ist es ferner nicht möglich, auf unterschiedliche Fischgrößen oder Fischarten innerhalb der zu bearbeitenden Fische einzugehen.

Bei verschiedenen Fischarten entstehen durch die bekannten Vorrichtungen und Verfahren, wie es der DE 10 2015 106 010 A1 zu entnehmen ist, aufgrund der fixen Ausrichtung/Stellung der Kreismesser zueinander in Bezug auf die Lage des Punktes des geringsten Abstandes während der Fleischgewinnung besonders große Ausbeuteverluste und/oder Verletzungen des Grätengerüstes bzw. der Flossen/Flossenhaltern/Flossensäumen, was zu Verunreinigung des zu gewinnenden Fleisches oder zu Produktionsausfällen führen kann. Diese Problematik tritt beispielsweise bei der Bearbeitung von Lachs, Weißfisch und insbesondere Kabeljau auf, bei dem die Hauptgräte eine sich vom Schwanz zum Kopf hin veränderliche Form aufweist. Durch die starre Kreismesserausrichtung bezogen auf die Lage des Punktes des kleinsten Spaltmaßes kommt es zu Fehlschnitten und/oder Ausbeuteverlusten im Bereich der Hauptgräte. Ferner ist die Bearbeitung von Lachsen mit den bekannten Vorrichtungen nur bedingt zuverlässig möglich, da diese häufig mit unterschiedlichen Ausmaßen vorliegen, weshalb regelmäßig eine Vorsortierung erfolgen muss, da die Vorrichtungen derartige Einstellmöglichkeiten der Löseeinrichtungen zur möglichst vollständigen Gewinnung des Fleisches nicht vollführen können.

Aus der DE 943 612 ist ein Verfahren und eine Vorrichtung zum maschinellen Bearbeiten von Fischen, insbesondere zum Filetieren, bekannt. Dabei werden die Fische mit dem Schwanz voran an den Bearbeitungswerkzeugen vorbeigeführt. Die DE 197 45 891 offenbart ein Verfahren und eine Vorrichtung zum Abtrennen des Muskelfleisches von geköpften Fischen. Dabei können die vorgesehenen Trennmittel in verschiedenen Positionen verstellbar ausgebildet sein. Aus der WO 2011/151221 geht eine Vorrichtung und ein Verfahren zum vollständigen Abtrennen von Filets vom Grätengerüst von Fischen hervor, bei der zwei Kreismesser zum Abtrennen vorgesehen sind, deren Abstand in Bezug auf unterschiedliche Referenzpunkte vergrößert werden kann. GB 1,100,146 offenbart eine Vorrichtung und ein Verfahren zum Schneiden und Säubern von Fischen, bei dem gegenüberliegend angeordnete Messer direkt in Abhängigkeit von der Breite der Fische eingestellt werden.

Weiterhin sind aus dem Stand der Technik federgelagerte Kreismesser bekannt, die zu Ausbeutesteigerungen führen sollen. Auch bei derartigen Vorrichtungen findet eine fixe Ausrichtung der Kreismesser zueinander statt, was die maximale Bandbreite der zu bearbeitenden Fische deutlich einschränkt. Ferner bietet eine Verschwenkung der Kreismesser um die horizontale Achse nur die Möglichkeit, den Abstand der Spaltbreite des Spalts zu verändern, was allerdings auch mit einer geänderten Schnittführung einhergeht. Die bekannten Vorrichtungen bieten nur relativ geringe Möglichkeiten, um individuelle Schnittführungen auszuführen. Bei Fischarten wie z.B. beim Lachs, befinden sich im Bereich der Hauptgräte (die im Folgenden auch Mittel- oder Rückengräte genannt wird) insbesondere im Bereich zwischen Schwanz und Rückenflosse besonders fleischhaltige Bereiche, die mit den bekannten Vorrichtungen und Verfahren nur unbefriedigend geerntet werden können.

Aus den genannten Gründen existieren daher nach der Bearbeitung mit den bekannten Vorrichtungen bzw. den bekannten Verfahren im Bereich der Rückengräte weiterhin Abschnitte, die aus reinem Fleisch bestehen, was nicht gewonnen werden konnte. Die bekannten Vorrichtungen orientieren sich bei der Ausrichtung der Kreismesser auf einen definierten Abstand vom Anschnitt der Schwanzwurzel bis zum Ende des Köpfschnitts, was bei der anschließenden Bearbeitung mit den Kreismessern zu Ausbeuteverlusten führt. Insbesondere im Bereich der Schwanzwurzel bis zum Bereich der Rückflosse ist durch eine "Unverstellbarkeit" des Abstandes der Kreismesser, eine zuverlässige und ausbeutestarke Gewinnung des Fleisches nicht möglich. Eine zügige Einstellbarkeit des Abstandes der Kreismesser ist bei den vorhandenen Vorrichtungen ohne großen mechanischen Aufwand nicht vorgesehen sowie nicht realisierbar. Derzeitig wird diesem Problem durch aufwändige Vorsortierung der Rohware begegnet, um mit dem einheitlichen Abstand der Kreismesser ein bestmögliches Ausbeuteergebnis zu erzielen. Bei zu geringen Messerabständen kann es dabei jedoch im Filetierprozess bei Kontakt eines Kreismesser mit dem Grätengerüst des Fisches zu Geschwindigkeitsverlusten kommen, was bei einer Ungleichverteilung der Messerschnittgeschwindigkeiten zu Schnittfehlern führt. Ferner kann die gebremste Schnittgeschwindigkeit zu unpräzisen Schnitten bzw. einem Reißen des Fleisches führen, was sich in Qualitätsverlusten ausdrückt. Sind die Kreismesser dagegen zu weit voneinander entfernt ausgerichtet, kann es durch unzureichende Fleischgewinnung zu hohen Ausbeuteverlusten kommen, was höchstens durch eine maschinelle Gewinnung des Restfleisches mit Separatoren abgemildert werden kann, was wiederum zu hohen Kosten oder Qualitätsverlusten des Endprodukts führt.

Es ist daher Aufgabe der vorliegenden Erfindung, eine Vorrichtung zur Fischbearbeitung vorzuschlagen, die eine zuverlässige und ausbeuteeffiziente, automatische Gewinnung von Fleisch gewährleistet, wodurch ein möglichst vollständiges Abtrennen bzw. Lösen des Fleisches vom Grätengerüst der Fische erfolgen soll. Des Weiteren besteht die Aufgabe darin, ein entsprechendes Verfahren vorzuschlagen.

Die Aufgabe wird durch eine eingangs genannte Vorrichtung mit den technischen Merkmalen den unabhängigen Anspruchs 1 gelöst. Die Löseeinrichtung umfasst eine Steuereinrichtung, die eingerichtet ist, die Spaltbreite des Spalts S in Abhängigkeit der durch die Messeinrichtung erfasste Fischanatomie, insbesondere der Höhe, der Länge und/oder der Breite der Fische, einzustellen, wobei die Steuereinrichtung ausgebildet ist, die Spaltbreite des Spalts S vor dem Lösen des Fleisches vom Grätengerüst voreinzustellen und wobei die Steuereinrichtung ausgebildet ist, die Spaltbreite des Spalts S während des Lösens des Fleisches vom Grätengerüst zu verändern. Dies bietet den Vorteil, dass die mindestens zwei steuerbeweglichen Kreismesser einerseits in Abhängigkeit der Fischanatomie des zu bearbeitenden Fisches optimal für die Ausführung eines Löseschnittes zum Lösen des Fleisches vom Grätengerüst mittels der Löseeinrichtung voreingestellt werden und andererseits werden die mindestens zwei steuerbeweglichen Kreismesser optimal während des Lösens des Fleisches vom Grätengerüst verändert. Auf diese Weise wird die zwischen den mindestens zwei Kreismessern befindliche Spaltbreite des Spalts S so zueinander eingestellt, dass ein Löseschnitt mit hoher Präzision erreicht wird. Durch die veränderbare Spaltbreite des Spalts S wird unabhängig von der Fischanatomie und Größe der geköpften und entweideten Fische immer eine möglichst optimale Ausbeute bei der Gewinnung des Fleisches erzielt. Dabei wird die Spaltbreite des Spalts S vorzugsweise derart gewählt, dass die Kreismesser möglichst nah das Fleisch vom Grätengerüst der Fische lösen, ohne das Grätengerüst oder Teile davon zu beschädigen oder einzuschneiden. Auf diese Weise kann der Ausschuss bzw. das an den Gräten nach der Gewinnung des Fleisches anhaftende ungelöste Fleisch reduziert werden, wodurch die Ausbeute bei der Fleischgewinnung erhöht wird. Dies führt einerseits zu einer höheren Effizienz der Vorrichtung und verringert andererseits den Aufwand bei einer möglichen nachgeordneten Gewinnung des an dem Grätengerüst verbleibenden Restfleisches. Zudem kann auf diese Weise die Qualität des Endproduktes erhöht werden, da größere zusammenhängende Fleischportionen gewonnen werden. Mit der erfindungsgemäßen Vorrichtung ist eine individuelle und bedarfsgerechte Anpassung der Spaltbreite des Spalts S bezüglich der Fischanatomie, insbesondere der Höhe, der Länge und/oder der Breite der Fische bzw. der Lage/Position der Fische, sichergestellt, so dass jeder Fisch individuell bearbeitet werden kann, was zu ausbeute- und qualitätsoptimierten Resultaten führt. Durch die erfindungsgemäße Lösung der Aufgabe ist eine dynamische Verstellung des Kreismesserabstandes gegeben, ohne zeitaufwendige Umrüstungen. Es ist insbesondere, aufgrund der Einstellbarkeit der Kreismesser durch die Steuereinrichtung, eine werkzeuglose Abstandsveränderung möglich. Dadurch, dass eine Einstellbarkeit bzw. Veränderbarkeit der Spaltbreite des Spalts S mittels der Steuereinrichtung gegeben ist, also die Einstellung vor der Fischbearbeitung und während der Fischbearbeitung möglich ist, kann der Spalt S je nach erfasster Fischanatomie der zu bearbeitenden Fische individuell und über den Verlauf der Bearbeitung bedarfsgerecht voreingestellt bzw. verändert werden. Mit anderen Worten kann der Spalt S ausgehend von einer voreingestellten Spaltbreite angepasst werden, d. h. je nach Fischanatomie kann der Spalt S im Verlauf der Bearbeitung vergrößert oder verkleinert werden, so dass das Fleisch des Fisches möglichst vollständig vom Grätengerüst abgelöst wird. Einfach ausgedrückt ermöglicht die Erfindung das produktspezifische Voreinstellen / Verändern des durch die Kreismesser gebildeten Spalts S mit dem Effekt einer ausbeuteeffizienten und anpassbaren Gewinnung des Fleisches in Abhängigkeit der vorliegenden Fischanatomie. Die Spaltbreite des Spalts S sollte dabei so gewählt werden, dass der Spalt S während eines Löseschnittes oder Trennschnittes mindestens abschnittsweise bzw. temporär einerseits so groß gewählt ist, dass z. B. Flossenhalterbeschädigungen ausgeschlossen werden können und andererseits so klein ausgewählt werden kann, dass die maximale Ausbeute erzielt wird.

Die erfindungsgemäße Vorrichtung umfasst eine mit der Messeinrichtung und der Steuereinrichtung elektrisch verbundene Steuereinheit, ausgebildet und eingerichtet zum Erfassen und/oder Verarbeiten von durch die Messeinrichtung erfasster Daten der Fischanatomie, insbesondere der Höhe, der Länge und/oder der Breite der Fische, und zur Ansteuerung der Steuer-Antriebseinheit zum Einstellen eines Spalts zwischen zwei Kreismessern entsprechend der jeweiligen Fischanatomie, insbesondere der Höhe, der Länge und/oder der Breite der Fische, indem die Steuereinheit die Steuer-Antriebseinheit derart ansteuert, den Umlauf der Kurvenscheibe in einem vorgegebenen Winkelgeschwindigkeitsprofil einzustellen.

Unter "Fische" im Sinne der Erfindung fallen grundsätzlich sämtliche (Speise-)Fischarten, die zur industriellen/maschinellen Verarbeitung geeignet sind. Als Fischarten können unter anderem Weißfische z. B. Kabeljau oder Schellfisch eingesetzt werden. Die Vorrichtung ist jedoch in gleicher Weise auch für andere Fischarten, insbesondere Lachs einsetzbar. Die geköpften und entweideten Fische weisen jeweils unterschiedliche Fischanatomien auf, die insbesondere durch das Alter, das Geschlecht, die Fischart, die Herkunft, das Futter sowie dem Genpool bestimmt sind. Die Fischanatomie umfasst dabei fischanatomische Merkmale bzw. Parameter der Fische. Unter "Fischanatomie" sind somit insbesondere die Höhe, die Länge und/oder die Breite der Fische zu verstehen. Die erfindungsgemäße Vorrichtung ist zur Bearbeitung des Fleisches der Fische oder mindestens Teilen davon anhand ihrer spezifischen Fischanatomie ausgebildet und eingerichtet. Dazu werden die Fische der Vorrichtung bereits geköpft und mindestens teilweise bzw. überwiegend entweidet zur Verfügung gestellt. Je nach Ausgestaltung der Vorrichtung können Entweidungs- und Köpfvorrichtungen in einer Bearbeitungslinie direkt vorgelagert angeordnet sein.

Als Transporteinrichtung kommen sämtliche Einrichtungen in Betracht, die geeignet sind, den Fisch entlang des Transportpfads in eine bestimmte Richtung zu transportieren. Der Fisch kann dafür beispielsweise auf einer die Transporteinrichtung umfassenden Haltevorrichtung positioniert oder angeordnet werden. Die Transporteinrichtung umfasst vorzugsweise ein Antriebsmittel sowie ein kontinuierliches Transportmittel zur Förderung der Fische bzw. der Haltevorrichtungen entlang des Transportpfads.

Unter "Messeinrichtung" ist eine mechanische, elektrische und/oder elektronische Einrichtung zu verstehen, die zur Erfassung der Fischanatomie ausgebildet ist. Die Messeinrichtung ist zum Erfassen und/oder Bestimmen fischgrößenrelevanter Daten ausgebildet und erfasst die Fischanatomie vorzugsweise in Form eines oder mehreren Datensätzen, um diese weiter bevorzugt zu speichern und um diese anschließend für weitere Verwendungen verfügbar zu machen. Die Daten der Fischanatomie umfassen dabei nicht nur die Körpergröße der Fische mit der Länge, Höhe, Breite etc., sondern insbesondere auch Verhältnisse, Formen, Farbgebung sowie Festigkeiten zwischen den zu bearbeitenden Fischen. Die Daten der Fischanatomie werden vorzugsweise in einer Datenbank gespeichert. Die durch die Messeinrichtung zu erfassenden Parameter der Fischanatomie sollen insbesondere Parameter zur bedarfsgerechten Ansteuerung der Kreismesser beinhalten, wobei explizit weitere Parameter umfasst sein können, die in weiteren Verarbeitungsschritten verwendet werden können. Das Ziel besteht darin die Fischanatomie bestmöglich zu erfassen, um die Fleischbereiche zu lokalisieren, um diese anschließend mittels der Löseeinrichtung möglichst verlust- und zerstörungsfrei abzulösen; weiter bevorzugt kann die Messeinrichtung ausgebildet sein, das Grätengerüst bzw. die Gräten zu lokalisieren, um anschließend die entsprechende Gewinnung von Fleisch an die Lokalisation der Gräten anzupassen. Je nach zu erfassenden Fischparametern umfasst die jeweilige Messeinrichtung geeignete Erfassungssysteme, wie beispielsweise Sensorsysteme, Drehwertgeber, optische Erfassungsmodule, Wägeeinrichtungen, Schallsensoren etc. Die Messeinrichtung umfasst somit mechanische, elektronische, optische Komponenten oder Elementkombinationen daraus, die zum Erfassen und/oder Bestimmen fischgrößenrelevanter Daten geeignet sind. Die Messeinrichtung umfasst insbesondere solche Elemente, mittels denen die Höhe, die Länge und/oder die Breite der Fische bestimmt werden können und/oder mit denen die Lage der Schwanzwurzel und/oder die Lage der Rückenflosse ermittelbar, also insbesondere direkt erfassbar und/oder über entsprechende Berechnungsmodelle bestimmbar, ist. Die Messeinrichtung kann weiter bevorzugt auch nur die Fischart erfassen, wodurch anschließend die Voreinstellung des Spalts S der Kreismesser erfolgt und/oder die veränderbare Einstellung der Spalts S während der Gewinnung des Fleisches.

Die Löseeinrichtung zum Lösen des Fleisches vom Grätengerüst weist die Kreismesser zum Ausführen der erforderlichen Messerschnitte auf. Die Löseeinrichtung bzw. die Kreismesser können dabei ausdrücklich weitere Bauteile umfassen, insbesondere Aufhängungen für die Kreismesser sowie Antriebs- und Steuermittel. Mit der Löseeinrichtung erfolgt vorzugsweise das Freischneiden bzw. der Löseschnitt oder Rückenschnitt entlang der Rückengräten des oberen Grätengerüstes bei den Fischen. Bei den Messerschnitten erfolgt weiter bevorzugt ein Freischneiden von Dorsalspeichen oder von anderen zum Grätengerüst gehörenden Gräten oder Grätengerüstabschnitten, um das Fleisch anschließend, besonders bevorzugt mit weiteren nicht erfindungsgegenständlichen Trennmitteln beispielsweise mindestens einer Trenneinrichtung abzutrennen.

Die Steuereinrichtung erfüllt insbesondere einerseits den Zweck, die Kreismesser mit ihrem Antrieb sowie in der Ausrichtung anzusteuern und zu überwachen und andererseits mittels der durch die Messeinrichtung erfassten Daten eine Veränderung der Kreismesser einzurichten, um die Kreismesser dynamisch an die jeweiligen Fischanatomien anzupassen. Die Steuereinrichtung umfasst die mechanischen Komponenten zur Einrichtung der Abstandsänderung sowie die (steuerelektronischen) Komponenten zur Veränderung des Abstands in Abhängigkeit zur Fischanatomie. Weiter bevorzugt umfasst die Steuereinrichtung mindestens eine Rechnereinheit, die Steuersignale zur Ansteuerung und Veränderung der Spaltbreite des Spalts S erzeugt.

Unter der "Spaltbreite des Spalts S" ist der Abstand, vorzugsweise der geringste Abstand, zwischen den mindestens zwei Kreismessern zu verstehen. Die Spaltbreite kann je nach zu bearbeitendem Fisch individuell eingestellt bzw. verändert werden, wobei die jeweilige Veränderung besonders bevorzugt proportional zu den jeweiligen Fischparametern bzw. der Fischanatomie der zu bearbeitenden Fische erfolgt. Die Veränderung der Spaltbreite des Spalts S erfolgt durch Positionsänderung der Kreismesser. Es ist mindestens eines der mindestens zwei Kreismesser zum Transportpfad veränderbar, d. h. es kann auch nur bei einem Messer der Abstand zum Transportpfad verändert werden, wodurch der Spalt S veränderbar ist. Die Spaltbreite des Spalts S liegt vorzugsweise während der Bearbeitung in einem Bereich von ca. 1 mm bis ca. 20 mm, wobei für einen Großteil der zu bearbeitenden Fische besonders bevorzugt Werte im Bereich von ca. 3 mm bis ca. 8 mm zweckdienlich sind. Die Veränderung der Spaltbreite des Spalts S bzw. der Kreismesser zum Transportpfad, eingerichtet mittels der Steuereinrichtung, liegt vorzugsweise während des Lösens des Fleisches vom Grätengerüst in einem Bereich von maximal ±10 mm. Besonders bevorzugt liegt die Veränderung im Bereich von wenigen Millimetern, d. h. bevorzugt im Bereich von 0,2 mm bis 3,5 mm.

Eine zweckmäßige Ausgestaltung der Erfindung ist dadurch gekennzeichnet, dass die Kreismesser mittels der Steuereinrichtung synchron zueinander und/oder im Wesentlichen orthogonal zum Transportpfad verstellbar eingerichtet sind. Auf diese Weise ist es möglich, die Spaltbreite bzw. den Abstand der Kreismesser zueinander einheitlich auszubilden. Zum Lösen bzw. Freischneiden wird der Fisch mittels der Transporteinrichtung auf dem Transportpfad in Transportrichtung T durch die Kreismesser hindurch transportiert, wobei der Fisch bzw. die Mittelgräte (Wirbelsäule) des Fisches in Transportrichtung T in Verbindung mit der y-Achse eine Transportebene definiert. Die orthogonale Verstellbarkeit zum Transportpfad bedeutet, dass die Kreismesser orthogonal zu der Transportebene verstellbar sind. Besonders bevorzugt ist der Spalt S nur durch die orthogonale Verstellbarkeit der Kreismesser zu der Transportebene in der Spaltbreite veränderbar. Die zu bearbeitenden Fische weisen üblicherweise eine überwiegend symmetrische Anatomie auf, wodurch bei der Bearbeitung eine symmetrische Anordnung der Schneidmittel zu bevorzugen ist. Durch die erfindungsgemäße Verstellbarkeit der Kreismesser ist ebenfalls eine synchrone Verstellbarkeit zu bevorzugen, da hiermit jederzeit die symmetrische Anordnung der Schneidmittel zueinander sichergestellt ist. Durch die synchrone Verstellbarkeit ist zudem sichergestellt, dass die Schnitte der jeweiligen Kreismesser einheitlich erfolgen, was in einem gleichmäßigen Schnittbild resultiert. Durch die synchrone Verstellbarkeit wird zudem der Rüstaufwand minimiert, da bei einer einzigen Verstellung automatisch eine einheitliche Verstellung aller Schneidmittel erfolgt. Die im Wesentlichen orthogonale, vorzugsweise lineare Verstellbarkeit der Kreismesser zum Transportpfad führt zu einer vorbestimmten Bandbreite an möglichen Spaltbreiten. Die Verstellbarkeit innerhalb dieser linearen Anordnung ist bevorzugt stufenlos. Bevorzugterweise können die Kreismesser weitere Bestandteile, z. B. Aufhängungen für die Kreismesser, umfassen, die zur Verstellbarkeit der Kreismesser beweglich und/oder steuerbar ausgebildet sind. "Synchron verstellbar" bedeutet, dass die mindestens zwei Kreismesser gleichzeitig, simultan verstellbar sind. "Verstellbar" bedeutet, dass insbesondere die Drehgeschwindigkeit synchron veränderbar ist sowie dass der Abstand zum Transportpfad synchron veränderbar ist. Die Kreismesser können vorzugsweise mechanisch, elektronisch, und/oder magnetisch synchronisierbar sein. "Im Wesentlichen orthogonal" bedeutet, dass die an der Löseeinrichtung angeordneten Kreismesser bzw. die Löseeinrichtung selbst senkrecht zum Transportpfad und entlang dieser Achse in der Transportebene der Fische linear verstellbar sind, wobei Abweichungen um bis zu ± 10° möglich sind.

Eine bevorzugte Weiterbildung der Erfindung zeichnet sich dadurch aus, dass die Kreismesser derart zueinander angeordnet sind und/oder derart zueinander einstellbar ausgebildet sind, dass der Spalt S v-förmig ist. Der Spalt S ist insbesondere in und entgegen der Transportrichtung T v-förmig einstellbar ausgebildet. Die Ausgestaltung eines v-förmigen Spalts S, was insbesondere durch die Stellung der Kreismesser zueinander erzeugt wird, ist beispielsweise im Bereich des Fischschwanzes gewünscht, um z. B. ausreichend Platz für die Flossensäume im Schwanzbereich vorzusehen. Die Ausbildung des Spalts S v-förmig ist durch eine beliebige Stellung der Kreismesser zueinander erzeugbar. Der Spalt S kann beispielsweise bei einer Draufsicht der Kreismesser v-förmig sein, alternativ kann der Spalt S auch bei einer Sicht von Vorne oder einer gewinkelten Stellung der Kreismesser zueinander v-förmig sein. Zur Ausbildung des v-förmigen Spalts S haben die beiden Kreismesser vorzugsweise den Punkt des geringsten Abstandes am unteren Scheitelpunkt der Kreismesser. Mit dieser Stellung kann ein erhöhter Ausbeutegewinn erzielt werden und gleichzeitig kann das Auftreten von Fehlschnitten minimiert werden. Weiter bevorzugt ist die Stellung der Kreismesser zueinander variabel ausgebildet und eingerichtet, um den daraus resultierenden v-förmigen Spalt S bedarfsgerecht anzupassen.

Gemäß einer weiter bevorzugten Ausbildung der Erfindung sind die Kreismesser als Rückenmesser zur Durchführung eines Rückenschnittes zur Ablösung des Rückenfleisches der Fische ausgebildet und eingerichtet. Vorzugsweise sind die Kreismesser als gegenüberliegend angeordnetes Kreismesserpaar ausgebildet. Weiter bevorzugt ermöglicht der Rückenschnitt ein Freischneiden der Dorsalspeichen, wobei anschließend ein Abtrennen des Rückenfleisches ggfs. mittels mindestens einer Trenneinrichtung mit Trennmitteln erfolgt. Der Bereich zwischen der Schwanzflosse und insbesondere der Schwanzwurzel einerseits und der Rückenflosse andererseits ist insbesondere beim Lachs besonders fleischhaltig, so dass die Ausbildung und Einrichtung der Kreismesser zum Freischneiden des Rückenfleisches, insbesondere der Dorsalspeichen, einen besonders signifikanten Einfluss auf die gesteigerte Ablösung bei der Gewinnung von Fleisch im Vergleich zu herkömmlichen Vorrichtungen aufweist.

Eine zweckmäßige Ausgestaltung der Erfindung ist dadurch gekennzeichnet, dass die Transporteinrichtung zum Transportieren der Fische schwanzvoraus in Transportrichtung T entlang des Transportpfads ausgebildet und eingerichtet ist. Vorzugsweise werden die Fische mittels der Transporteinrichtung in Transportrichtung T entlang eines Transportpfads schwanzvoraus und mit der offenen und entweideten Bauchhöhle nach unten transportiert. Durch den Transport schwanzvoraus wird beim Schnitt mittels der Kreismesser bei der Gewinnung des Fleisches aufgrund der Anatomie der Fische die Spaltbreite S weiter bevorzugt sukzessive entlang des Grätengerüsts vergrößert, was in einer verbesserten Schnittführung resultiert und die Gefahr für Beschädigungen verringert.

Eine bevorzugte Weiterbildung der Erfindung zeichnet sich dadurch aus, dass die Steuereinrichtung eine Kurvensteuerung umfasst, wobei die Kurvensteuerung eine mittels einer Steuer-Antriebseinheit angetriebene Kurvenscheibe zur Positionsänderung der Kreismesser umfasst. Die Kurvensteuerung der Steuereinrichtung bietet eine komfortable Lösung, den Abstand der Kreismesser zueinander zu steuern bzw. dadurch die Spaltbreite des Spalts S bedarfsgerecht einzustellen. Zur Änderung des Spalts S ist die Kurvensteuerung in Wirkverbindung mit den steuerbeweglichen Kreismessern ausgebildet, beispielsweise indem die Kreismesser ein Bolzenelement zum Eingriff mit der Kurvensteuerung umfasst. Die Kurvensteuerung mit der Kurvenscheibe ist durch die Steuer-Antriebseinheit angetrieben und ermöglicht die Erzeugung einer Drehbewegung der Kurvenscheibe. Die Bewegung der Kurvenscheibe wird mittels der Steuer-Antriebseinheit erzeugt, wobei diese weiter bevorzugt ausgebildet und eingerichtet ist, eine links- und rechtsdrehende Bewegung auszuführen. In einer weiteren bevorzugten Ausführungsform ist nur eine einzelne Kurvenscheibe für die mindestens zwei Kreismesser vorgesehen, so dass eine synchrone Steuerung der Kreismesser und eine einheitliche Veränderung des Abstands der Kreismesser zum Transportpfad gegeben ist, indem die Kurvenscheibe auf beide Kreismesser gleichermaßen einwirkt. Vorzugsweise umfasst die Kurvensteuerung ein Kurvengetriebe, um unterschiedliche Bewegungsabläufe und daher Positionsänderungen der Kreismesser auszuführen. Die Steuer-Antriebseinheit kann beispielsweise als Schwenkantrieb ausgebildet und eingerichtet sein, um die Kurvenscheibe in einem vorgegebenen Bereich zuverlässig anzutreiben bzw. zu steuern.

Eine bevorzugte Ausführungsform ist dadurch gekennzeichnet, dass mittels der Kurvenscheibe einerseits ein definierter Spalt S voreinstellbar ist und andererseits während des Lösens des Fleisches vom Grätengerüst der Fische in Abhängigkeit von der erfassten Fischanatomie, insbesondere von der Höhe, der Länge und/oder der Breite der Fische, automatisch ein veränderbarer Spalt S bildbar ist. Durch die automatische Veränderung des Spalts S erfolgt eine möglichst vollständige Gewinnung des Fleisches der Fische, da die Kreismesser über den gesamten Verlauf der Gewinnung an die Fischanatomie anpassbar sind. Dazu führt die Steuer-Antriebseinheit vorzugsweise keine konstante oder volle Drehbewegung der Kurvenscheibe aus, sondern eine bedarfsgerechte Bewegung der Kurvenscheibe in Abhängigkeit der erfassten Fischanatomie, um damit einerseits den Spalt S vor der Bearbeitung der Fische voreinzustellen, was durch eine Bewegung der Kurvenscheibe und einer damit einhergehenden Steuerung der Kreismesser zueinander eingerichtet wird, und um andererseits den Spalt S während der Bearbeitung der Fisch zu verändern, was ebenfalls durch eine Bewegung der Kurvenscheibe und einer damit einhergehenden Steuerung der Kreismesser zueinander eingerichtet wird. Insgesamt ist die Kurvenscheibe somit in beide Richtungen mittels der Steuer-Antriebseinheit um ihre Rotationsachse drehbeweglich eingerichtet, wobei bei der Drehbewegung in die eine Richtung vorzugsweise eine Vergrößerung des Spalts S eingerichtet wird und bei der Drehbewegung in die andere Richtung vorzugsweise eine Verkleinerung des Spalts S eingerichtet wird. Die Veränderung des Spalts S erfolgt "automatisch" im Sinne der Erfindung, indem die Steuereinrichtung bzw. die Kurvensteuerung mit der Messeinrichtung gekoppelt ist und die Veränderung der Spaltbreite des Spalts S in Abhängigkeit der erfassten Fischanatomie erfolgt. Dabei werden vorzugsweise auf Basis der erfassten Daten der Fischanatomie der gewünschte Messerschnitt der Kreismesser ausgeführt, was in der Veränderung des Spalts S resultiert. Die Basis des automatischen Messerschnitts bildet die Fischanatomie, indem beispielsweise durch die Höhe, Länge und/oder Breite des Fisches auf die zu erwartenden Mittelgräten- und/oder Dorsalspeichendicke geschlossen werden kann, um daran die Kreismesser entsprechend auszurichten. Weiterhin kann durch das Wissen der entsprechenden Fischanatomie in Verbindung mit Kundenwünschen an das Endprodukt (z.B. maximal möglicher Fleischgewinn oder möglichst grätenfreies Produkt) die automatische Veränderung der Spaltbreite des Spalts S angepasst sein.

Eine bevorzugte Weiterbildung der Erfindung zeichnet sich dadurch aus, dass die durch die Steuer-Antriebseinheit angetriebene Kurvenscheibe mindestens eine Umfangssteuerkurve aufweist, die zur Steuerung des Spalts S eingerichtet ist, wobei einerseits eine statische Ausbildung des Spalts S vor dem Lösen des Fleisches vom Grätengerüst der Fische einstellbar ist und eine dynamische Ausbildung des Spalts S während des Lösens des Fleisches vom Grätengerüst der Fische einstellbar ist, indem jeweils das mindestens eine Kreismesser über ein bewegbar angeordnetes Kreismesseraufnahmeelement mit der Kurvenscheibe in Wirkverbindung steht. Die Umfangssteuerkurve ermöglicht eine vorgegebene Einstellmöglichkeit des Spalts S, indem je nach gewünschter Spaltbreite eine Ansteuerung der Umfangssteuerkurve erfolgt. Sofern keine Veränderung der Spaltbreite vorgesehen ist, d.h. eine statische Ausbildung des Spalts S, verbleibt das Kreismesser in der Position. Für eine Veränderung der Spaltbreite erfolgt eine Positionsänderung innerhalb der Umfangssteuerkurve. Die Umfangssteuerkurve ist vorzugsweise als Nutführungs-Steuerkurve mit einem darin geführten Bolzenelement ausgebildet und eingerichtet. Dazu umfasst die Kurvenscheibe mindestens eine Nutführung zur Zwangsführung des mit den Kreismessern in Wirkverbindung stehenden Bolzenelements, was zur Einrichtung der Einstellung / Änderung der Spaltbreite des Spalts S ausgebildet und eingerichtet ist, indem mindestens eines der Kreismesser in dem Kreismesseraufnahmeelement zum Transportpfad bewegt wird. Die Kreismesseraufnahmeelemente sind beispielsweise als Schlitten mit Aufnahmen für Kreismesser ausgebildet, die in einem vorgegebenen Bereich verfahren werden können, um die Veränderung des Spalts S einzurichten. Besonders bevorzugt umfasst die Kurvenscheibe zwei Nutführungen für die Aufnahme jeweils eines Bolzenelements, um die Kreismesser synchron zu verstellen, wobei eine Drehbewegung mittels der Antriebseinheit um eine Rotationsachse in beide Richtungen ausführbar ist. Das Kreismesseraufnahmeelement ist vorzugsweise drehbar antreibbar, um die Kreismesser anzutreiben. Alternativ kann die Umfangssteuerkurve auch dadurch erzeugt werden, dass ein Federelement mit der Kurvenscheibe in Wirkverbindung steht, das elastisch verformbar ist und wobei die Steuerung des Spalts S durch Dehnung (positive oder negative) erzeugbar ist.

In einer weiteren vorteilhaften Ausgestaltung der Erfindung umfasst die Steuer-Antriebseinheit einen Stellantrieb. Durch den Stellantrieb ist eine bedarfsgerechte Steuerung der Kurvenscheibe gegeben, wodurch einerseits eine schnelle Einstellung des Spalts S gegeben ist und andererseits eine an die Fischanatomie angepasste Veränderung des Spalts S gegeben ist. Auf diese Weise ist eine größere Bandbreite bei der Veränderung der Spaltbreite gegeben, da die Kurvenscheibe schneller, langsamer oder mit einem angepassten Krafteintrag angefahren werden kann. Der Stellantrieb ist vorzugsweise als Servomotor ausgebildet. Es sind jedoch auch weitere Stellantriebe oder Kombinationen unterschiedlicher Systeme einsetzbar, beispielsweise pneumatische, hydraulische, elektrische oder elektromagnetische Komponenten zur Steuerung und Regelung der Antriebseinheit.

Eine weitere zweckmäßige Ausbildung der Erfindung ist dadurch gekennzeichnet, dass die mindestens zwei rotierend angetriebenen Kreismesser von einer einzelnen Kreismesser-Antriebseinheit antreibbar eingerichtet sind. Der Antrieb der beiden Kreismesser mittels einer einzelnen Kreismesser-Antriebseinheit reduziert die Anzahl an erforderlichen Antriebseinheiten der Vorrichtung und trägt zu einer kompakteren Bauweise und einem geringeren Komplexitätsgrad bei, was wiederum zu einer kostengünstigen Bauweise beisteuert. Gleichzeitig erleichtert eine einzelne Kreismesser-Antriebseinheit einen synchronen Antrieb beider Kreismesser, was beispielsweise zu einem einheitlichen Schnittbild beiträgt.

In einer weiteren vorteilhaften Ausführungsform der Erfindung ist die Kreismesser-Antriebseinheit ausgebildet und eingerichtet, die Kreismesser synchron anzutreiben, wobei jedes der Kreismesser von einem mit der Kreismesser-Antriebseinheit in Wirkverbindung stehendem separaten Antriebsmittel antreibbar ist. Durch den synchronen Antrieb ist eine einheitliche Schnittgeschwindigkeit der Kreismesser gegeben, was zu konstanten Qualitäten bei den zu gewinnenden Filets bzw. dem Fleisch beiträgt. Der Einsatz von zwei Antriebsmitteln, die vorzugsweise mit der Kreismesser-Antriebseinheit in Wirkverbindung stehen, führt zu einer gleichmäßigen Kraftverteilung auf die Kreismesser. Besonders bevorzugt wird die Kraft von einem einzigen Kraftübertragungsmittel der Kreismesser-Antriebseinheit auf die zwei Antriebsmittel gleichermaßen übertragen, um einen gleichmäßigen Antrieb der Kreismesser zu gewährleisten. Die Antriebsmittel können vorzugsweise aus Riemen, Bändern, Ketten, Wellen etc. oder Kombinationen daraus ausgewählt sein. Vorteilhafterweise können die Kreismesser auch mit separaten Servomotoren angetrieben sein, die beispielsweise zur Erzeugung der Synchronität miteinander elektronisch koppelbar sind. Dies sorgt dafür, dass die Drehzahl der Messer kontrolliert gesteuert werden kann. Dadurch können die Messerdrehzahlen bei unterschiedlichen Widerständen auf gleichbleibender Drehzahl gehalten werden.

Gemäß der Erfindung umfasst die Vorrichtung weiter eine mit der Messeinrichtung und der Steuereinrichtung elektrisch verbundene Steuereinheit, ausgebildet und eingerichtet zum Erfassen und/oder Verarbeiten von durch die Messeinrichtung erfasster Daten der Fischanatomie, insbesondere der Höhe, der Länge und/oder der Breite der Fische, und zur Ansteuerung der Steuer-Antriebseinheit zum Einstellen des Spalts S entsprechend der jeweiligen Fischanatomie, insbesondere der Höhe, der Länge und/oder der Breite der Fische, indem die Steuereinheit die Steuer-Antriebseinheit derart ansteuert, den Umlauf der Kurvenscheibe in einem vorgegebenen Winkelgeschwindigkeitsprofil einzustellen. Die Steuereinheit umfasst vorzugsweise mindestens eine Rechnereinheit mit einer Speichereinheit zur Speicherung und/oder Verarbeitung der durch die Messeinrichtung erfassten Daten der Fischanatomie der Fische. Mittels der Steuereinheit ist eine bedarfsgerechte Einstellung bzw. Veränderung des Spalts S errechenbar und mittels der Kurvensteuerung ansteuerbar.

In einer weiteren bevorzugten Ausführungsform der Erfindung umfasst die Vorrichtung weiter mindestens eine Eingabeeinheit, ausgebildet zur Anpassung des Abstands mindestens eines der mindestens zwei Kreismesser zum Transportpfad, um die Spaltbreite des Spalts S vor dem Lösen des Fleisches vom Grätengerüst anzupassen und/oder um die Spaltbreite des Spalts S während des Lösens des Fleisches vom Grätengerüst anzupassen, und mindestens eine Ausgabeeinheit zum Ausgeben der durch die Eingabeeinheit eingegebenen Anpassung des Abstands. Die Eingabeeinheit ermöglicht eine Anpassung der Spaltbreite des Spalts S, vorzugsweise eine manuell eingegebene Anpassung, in Abhängigkeit der zu bearbeitenden Fische. Je nach Ausführungsform der Vorrichtung bzw. je nach Verwendung kann es zweckdienlich sein, dass bei Fischen nur Fleisch in einem bestimmten Bereich abgelöst wird, beispielsweise bei besonderen Qualitätsanforderungen. Das Lösen des Fleisches wird auf diese Weise in Abhängigkeit der Fischanatomie erfolgen, allerdings nur in dem zuvor angepassten Bereich. Die Ausgabeeinheit gibt dem Anwender die angepassten Bereiche aus oder zeigt dem Anwender die anzupassenden Bereiche an, vorzugsweise mittels visueller Hilfsmittel wie einem Monitor. Weiterhin kann vorzugsweise die Ausgabeeinheit die Eingabeeinheit beinhalten, um darüber manuelle Änderungen vorzunehmen.

Eine zweckmäßige Ausgestaltung der Erfindung ist dadurch gekennzeichnet, dass die Eingabeeinheit ausgebildet und eingerichtet ist, die Anpassung mindestens eines der mindestens zwei Kreismesser zum Transportpfad variabel einzustellen, wobei die Spaltbreite des Spalts S durch jedes der mindestens zwei Kreismesser um maximal ±10 mm anpassbar ist. Auf diese Weise kann mittels der Eingabeeinheit bereits im Vorfeld der durchzuführende Schnitt der Kreismesser je nach Anforderungen oder gewünschter Schnittführung angepasst werden. "Variabel" bedeutet in diesem Zusammenhang, dass über die Eingabeeinheit manuell die Schnittkurve mindestens eines der Kreismesser angepasst werden kann, d. h., dass Änderungen an der ursprünglich durch die Messeinrichtung vorgesehene Schneidverlauf erfolgen können. Die variable Anpassung umfasst vorzugsweise Werte, die im Bereich von mehreren mm liegen, um beispielsweise Gräten, Knorpel etc. zu umfahren, die weiter bevorzugt beispielsweise durch die Mess- bzw. durch eine Detektionseinrichtung erfasst wurden. Ergänzend oder alternativ kann je nach gewünschter Qualität oder nach gewünschter nachträglicher Weiterverarbeitung der Fische die Spaltbreite des Spalts S angepasst werden. Durch die Möglichkeit der Anpassung des Spalts S mittels der Eingabeeinheit ist eine Veränderung der Spaltbreite zur der ursprünglich vorgesehenen bzw. errechneten und mittels der Messeinrichtung erfassten Fischanatomie gegeben. Der Spalt ist somit vorzugsweise in einem Bereich von 1 mm bis 10 mm zu der voreingestellten Spaltbreite anpassbar, d. h. vergrößer- bzw. verkleinerbar, indem jeweils die Kreismesser zu dem Transportpfad hin- oder wegbewegt werden.

Eine weitere zweckmäßige Ausgestaltung der Erfindung ist dadurch gekennzeichnet, dass die Eingabeeinheit ausgebildet ist, fischartenabhängig Schneidprofile einzustellen, um die Spaltbreite des Spalts S entsprechend der Fischart vor und/oder während des Lösens des Fleisches vom Grätengerüst der Fische anzupassen, wobei eine variable Anpassung des Spalts S einstellbar ist. Durch die fischartenabhängige Einstellung der Schneidprofile ist beispielsweise ein Bereich des Spalts S vorgebbar, in dem die Kreismesser bewegbar sind, wodurch beispielsweise eine erforderliche Rechenleistung bei der Einstellung der Kreismesser zueinander reduziert wird. Ferner können spezielle Schnittführungen ausführbar sein, die nicht primär von der gesamten Fischanatomie abhängig sind, sondern z. B. nur von der Länge, der Höhe oder der Breite. Insgesamt kann die Verarbeitungsgeschwindigkeit auf diese Weise gesteigert werden und der Rechen- bzw. Regelungsaufwand für die Einstellung der Kreismesser reduziert werden.

In einer bevorzugten Ausführungsform der Erfindung umfasst die Messeinrichtung eine Detektionseinrichtung, wobei die Detektionseinrichtung ein Sensorsystem zur Erfassung der Daten der Fische aufweist, weiter bevorzugt ausgewählt aus der Gruppe der optischen Detektionssysteme, Drehwertgeber, Absolutwertgeber, Röntgensysteme und/oder Schallsensoren (z. B. Ultraschall).

Weiter bevorzugt ist der erfindungsgemäßen Vorrichtung mindestens eine weitere Löseeinrichtungen nachgelagert angeordnet, um ein vollständiges Gewinnen des Rückenfleisches vom Grätengerüst der entweideten Fische vorzunehmen. Regelmäßig umfassen Vorrichtungen zur Gewinnung von Fleisch von geköpften und entweideten Fischen zwei Löseeinrichtungen, wobei die erste Löseeinrichtung zur Durchführung eines Freischneidens des oberen Grätengerüstes (der Dorsalspeichen) ausgebildet ist und die weitere Löseeinrichtung zur Durchführung eines Flankenschnitts zum Freischneiden des unteren Grätengerüsts (der Ventralspeichen) ausgebildet ist. Auf diese Weise werden regelmäßig mindestens zwei zusammenhängende Filets von einem einzigen Fisch erzeugt; von jeder Seite des Fisches. Die erfindungsgemäße Vorrichtung dient insbesondere nur zur Durchführung des Freischneidens des oberen Grätengerüstes (der Dorsalspeichen).

Des Weiteren wird die Aufgabe durch ein Verfahren mit den technischen Merkmalen des unabhängigen Anspruchs 14 gelöst.

Zur Vermeidung von Wiederholungen wird im Zusammenhang mit dem erfindungs-gemäßen Verfahren auf die bereits im Zusammenhang mit der erfindungsgemäßen Vorrichtung im Detail geschilderten Vorzüge verwiesen. Diese gelten in analoger Weise auch für das angegebene erfindungsgemäße Verfahren.

Eine zweckmäßige Ausgestaltung der Erfindung ist gekennzeichnet durch Verstellen der Kreismesser synchron zueinander und/oder im Wesentlichen orthogonal zum Transportpfad mittels der Steuereinrichtung.

Gemäß einer weiter bevorzugten Ausbildung der Erfindung werden die Fische schwanzvoraus in Transportrichtung T entlang des Transportpfads mittels der Transporteinrichtung transportiert.

Ein erfindungsgemäßes Verfahren zeichnet sich durch Positionsändern der Kreismesser durch Antreiben einer die Steuereinrichtung umfassenden Kurvenscheibe mittels einer Steuer-Antriebseinheit aus.

Eine vorteilhafte Weiterbildung der Erfindung ist gekennzeichnet durch einerseits Voreinstellen eines definierten Spalts S mittels der Kurvenscheibe und andererseits automatisches Bilden eines veränderbaren Spalts S mittels der Kurvenscheibe während des Lösens des Fleisches vom Grätengerüst der Fische in Abhängigkeit von der Fischanatomie, insbesondere von der Höhe, der Länge und/oder der Breite der Fische.

Eine bevorzugte Weiterbildung der Erfindung zeichnet sich aus durch Antreiben der Kurvenscheibe durch die Steuer-Antriebseinheit und einerseits statisches Einstellen des Spalts S vor dem Lösen des Fleisches vom Grätengerüst der Fische und andererseits dynamisches Einstellen des Spalts S während des Lösens des Fleisches vom Grätengerüst der Fische mittels mindestens einer Umfangssteuerkurve der Kurvenscheibe durch Bewegen des mindestens einen Kreismessers über jeweils ein bewegbar angeordnetes Kreismesseraufnahmeelement.

Gemäß einer bevorzugten Weiterbildung werden die mindestens zwei rotierend angetriebenen Kreismesser von einer einzelnen Kreismesser-Antriebseinheit angetrieben.

Vorzugsweise wird jedes der Kreismesser mittels eines separaten Antriebsmittels der Kreismesser-Antriebseinheit angetrieben.

Ein erfindungsgemäßes Verfahren ist gekennzeichnet durch Erfassen und/oder Verarbeiten von durch die Messeinrichtung gemessener Daten der Fischanatomie, insbesondere der Höhe, der Länge und/oder der Breite der Fische, mittels einer mit der Messeinrichtung und der Steuereinrichtung elektrisch verbundenen Steuereinheit, und zur Ansteuerung der Steuer-Antriebseinheit durch die Steuereinheit zum Einstellen des Spalts S entsprechend der jeweiligen Fischanatomie, insbesondere der Höhe, der Länge und/oder der Breite der Fische, durch Einstellung des Umlaufs der Kurvenscheibe in einem vorgegebenen Winkelgeschwindigkeitsprofil.

Gemäß einer weiter bevorzugten Ausbildung der Erfindung wird der Abstand mindestens eines der mindestens zwei Kreismesser zum Transportpfad mittels mindestens einer Eingabeeinheit angepasst, durch Anpassen der Spaltbreite des Spalts S vor dem Lösen des Fleisches vom Grätengerüst und/oder durch Anpassen der Spaltbreite des Spalts S während des Lösens des Fleisches vom Grätengerüst, und Ausgeben der durch die Eingabeeinheit eingegebenen Anpassung des Abstands mittels mindestens einer Ausgabeeinheit.

Eine zweckmäßige Ausgestaltung der Erfindung ist gekennzeichnet durch variables Einstellen der Anpassung mindestens eines der mindestens zwei Kreismesser zum Transportpfad, wobei die Spaltbreite des Spalts S durch jedes der mindestens zwei Kreismesser um maximal ±10 mm angepasst wird.

Eine bevorzugte Weiterbildung der Erfindung zeichnet sich aus durch variable Anpassung der Spaltbreite des Spalts S mittels fischartenabhängiger Schneidprofile der Eingabeeinheit vor und/oder während des Lösens des Fleisches vom Grätengerüst der Fische.

Besonders bevorzugt wird das Verfahren mit einer Vorrichtung nach einem oder mehreren der Ansprüche 1 bis 15 ausgeführt.

Die sich daraus ergebenden Vorteile und Effekte wurden bereits im Zusammenhang mit der Vorrichtung beschrieben, weshalb zur Vermeidung von Wiederholungen auf die vorstehenden Passagen verwiesen wird.

Weitere zweckmäßige und/oder vorteilhafte Merkmale, Ausgestaltungen und Weiterbildungen der Erfindung ergeben sich aus den Unteransprüchen und der Beschreibung. Besonders bevorzugte Ausführungsformen der Vorrichtung sowie des Verfahrens werden anhand der beigefügten Zeichnungen näher erläutert. Die Zeichnungen zeigen:
- Fig. 1: eine schematische Darstellung einer erfindungsgemäßen Vorrichtung mit einer Messeinrichtung in einer perspektivischen Darstellung von schräg oben,
- Fig. 2: eine Seitenansicht eines geköpften und entweideten Fisches auf einer Haltevorrichtung angeordnet und mit stilisierten Kreismesser im Schwanzbereich des Fisches,
- Fig. 3: einen Teil der Löseeinrichtung mit zwei einen Spalt S bildende Kreismesser in einer Ansicht von vorne,
- Fig. 4: die Löseeinrichtung gemäß Fig. 3 in Draufsicht in einer Ausgangsstellung,
- Fig. 5: eine Steuereinrichtung der erfindungsgemäßen Vorrichtung in einer perspektivischen Darstellung von schräg oben,
- Fig. 6: die Steuereinrichtung gemäß Fig. 5 mit der Löseeinrichtung in einer Ansicht von vorne
und
- Fig. 7: die Steuereinrichtung gemäß Fig. 5 in einer Seitenansicht.

Die in den Zeichnungen dargestellte Vorrichtung dient zum automatischen Gewinnen von Fleisch von geköpften und entweideten Fischen. Die Fische müssen dabei nicht zwangsläufig geköpft oder vollständig entweidet sein, zur vereinfachten Bearbeitung sollten die Fische jedoch geköpft und teilweise bzw. weitestgehend entweidet sein. Die Erfindung wird anhand des Freischneidens von Dorsalspeichen bei Lachsen näher erläutert, insbesondere mittels als Kreismesser ausgebildete Rückenmesser. Die Vorrichtung ist jedoch in gleicher Weise auch für andere Fischarten, insbesondere für das Gewinnen von Fleisch von Weißfischen wie Kabeljau geeignet. Das erfindungsgemäße Prinzip ist grundsätzlich auch auf andere Löseeinrichtungen mit Kreismessern anwendbar, wobei die Kreismesser parallel oder in einer v-förmigen Stellung zueinander zur Bildung eines Spalts beabstandet sind. Auf diese Weise ist das Prinzip z.B. gleichermaßen auf das Freischneiden von Ventralspeichen oder von anderen zum Grätengerüst gehörenden Gräten oder Grätengerüstabschnitten anwendbar.

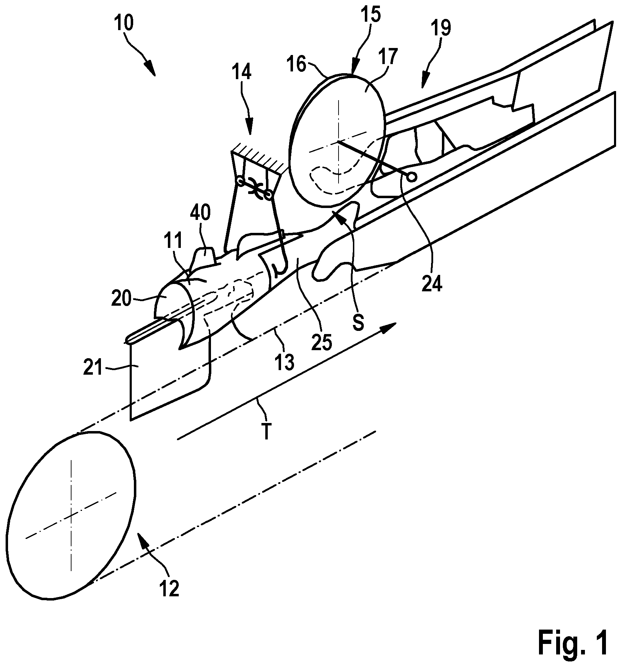

In der Fig. 1 ist eine Vorrichtung 10 zur automatischen Gewinnung von Fleisch 20 von geköpften und entweideten Fischen 11 dargestellt, umfassend eine Transporteinrichtung 12 zum Transportieren der Fische 11 in Transportrichtung T entlang eines Transportpfads 13, eine Messeinrichtung 14 zum Erfassen der Fischanatomie der Fische 11 sowie eine Löseeinrichtung 15 zum Lösen des Fleisches 20 vom Grätengerüst 18, wobei die Löseeinrichtung 15 mindestens zwei rotierend angetriebene und steuerbewegliche Kreismesser 16, 17 aufweist, die auf einander gegenüberliegenden Seiten des Transportpfads 13 zur Bildung eines Spalts S beabstandet zueinander angeordnet sind.

Diese Vorrichtung 10 zeichnet sich erfindungsgemäß dadurch aus, dass die Löseeinrichtung 15 eine Steuereinrichtung 19 umfasst, die eingerichtet ist, die Spaltbreite des Spalts S in Abhängigkeit der durch die Messeinrichtung 14 erfasste Fischanatomie, insbesondere der Höhe, der Länge und/oder der Breite der Fische 11, einzustellen, wobei die Steuereinrichtung 19 ausgebildet ist, die Spaltbreite des Spalts S vor dem Lösen des Fleisches 20 vom Grätengerüst 18 voreinzustellen und wobei die Steuereinrichtung 19 ausgebildet ist, die Spaltbreite des Spalts S während des Lösens des Fleisches 20 vom Grätengerüst 18 zu verändern.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

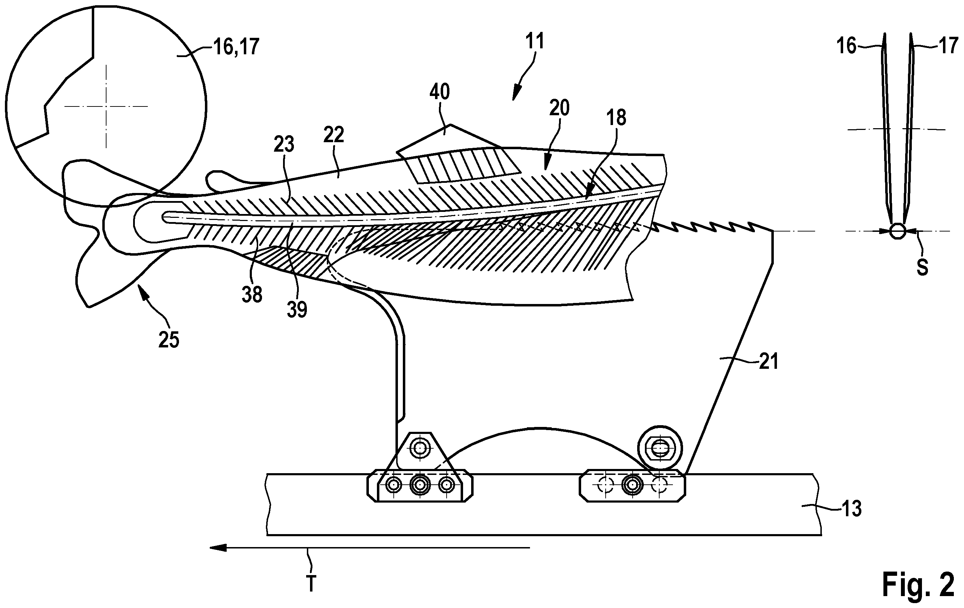

Bei der erfindungsgemäßen Vorrichtung 10 wird jeder Fisch 11 manuell oder automatisch auf einer Haltevorrichtung 21 positioniert, wie in der Fig. 2 gezeigt, und zwar mit der offenen und entweideten Bauchhöhle nach unten. In der Fig. 2 ist der Aufbau eines Fisches 11 mit dem Grätengerüst 18 exemplarisch beim Eingriff der Kreismesser 16, 17 im Bereich des Schwanzes 25 des Fisches 11 dargestellt. Die vorzugsweise zu bearbeitenden Fische 11 weisen regelmäßig, wie in der Fig. 2 gezeigt, Dorsalspeichen 23 sowie Ventralspeichen 38 auf, die unter anderem mit der Wirbelsäule 39 der Fische 11 das Grätengerüst 18 bilden. Durch die erfindungsgemäße Vorrichtung 10 erfolgt eine Gewinnung des an dem Grätengerüst 18 anhaftenden Fleisches 20; bzw. zumindest ein Freischneiden der Dorsalspeichen 23 mit dem Rückenfleisch 22, um anschließend eine möglichst vollständige Gewinnung des gesamten Fleisches 20 vorzunehmen. Auf der Haltevorrichtung 21 sind die Fische 11 bevorzugt in der Längsausrichtung positionierbar, um diese darauf mittels der Transporteinrichtung 12 zu transportieren.

Die Transporteinrichtung 12 ist vorzugsweise zum Transportieren der Fische 11 schwanzvoraus in Transportrichtung T entlang des Transportpfads 13 ausgebildet und eingerichtet ist. Mit der Haltevorrichtung 21 wird der Fisch 11 mittels der Transporteinrichtung 12 in Transportrichtung T zur Löseeinrichtung 15 transportiert. Vor Beginn des Löseschnitts am Schwanz 25 werden die Kreismesser 16, 17 mittels der Steuereinrichtung 19 spezifisch zueinander angeordnet, wodurch die Spaltbreite des Spalts S vor dem Lösen des Fleisches 20 vom Grätengerüst 18 voreingestellt wird. Die spezifische Voreinstellung des Spalts S erfolgt jeweils in Abhängigkeit der durch die Messeinrichtung 14 erfasste Fischanatomie der zu bearbeitenden Fische 11. Die Kreismesser 16, 17, auch bekannt als Rückenmesser, sind vorzugsweise zur Durchführung eines Rückenschnittes zur Ablösung des Rückenfleisches 22 der Fische 11 ausgebildet und eingerichtet. Die Kreismesser 16, 17 schneiden dazu bei den zu bearbeitenden Fischen 11 die Dorsalspeichen 23 des Grätengerüstes 18 frei, indem die Fische 11 derart durch den Spalt S geführt werden, dass die Kreismesser 16, 17 das Fleisch 20 bzw. das Rückenfleisch 22 möglichst nahe vom Grätengerüst 18 der Dorsalspeichen 23 lösen.

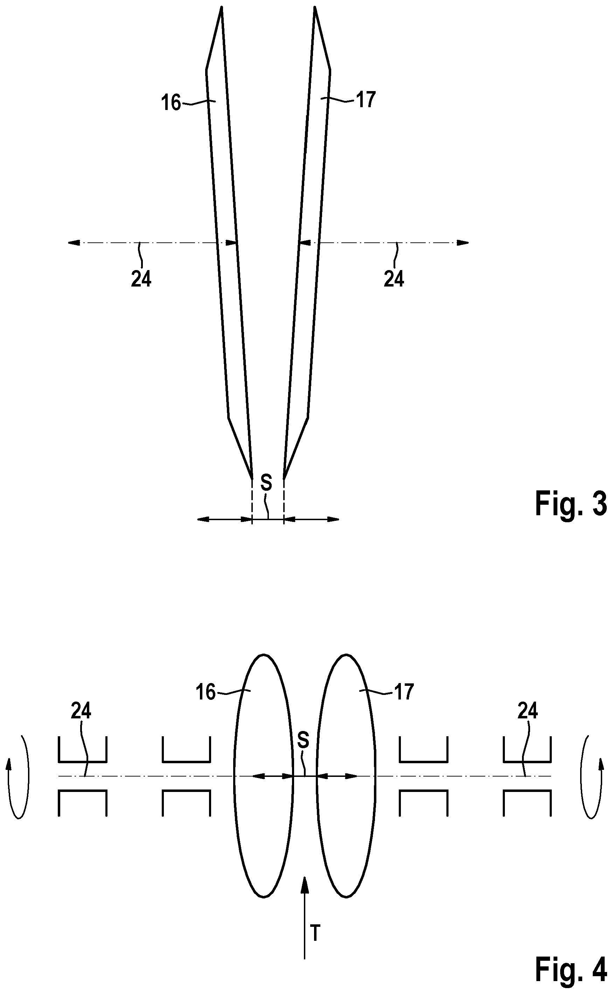

Durch den kontinuierlichen Transport der Fische 11 in Transportrichtung T beginnt der Schnitt, sobald der Fisch 11 bzw. das zu lösende Rückenfleisch 22 in den Wirkbereich der Kreismesser 16, 17 gelangt. Vorzugsweise sind die Kreismesser 16, 17 mittels der Steuereinrichtung 19 synchron zueinander und/oder im Wesentlichen orthogonal zum Transportpfad 13 verstellbar eingerichtet, d. h. in einer durch die y-Achse und die Transportrichtung T der Fische aufgespannten Transportebene. Die Kreismesser 16, 17 sind orthogonal zur Transportebene der Transportrichtung T verstellbar ausgebildet, d. h. die Kreismesser 16, 17 können horizontal in der Transportebene orthogonal zum Transportpfad 13 veränderbare Positionen einnehmen. Wie in der Fig. 2 und Fig. 3 gezeigt, sind in einer bevorzugten Ausführungsform die Kreismesser 16, 17 derart zueinander angeordnet und/oder derart zueinander einstellbar ausgebildet, dass der Spalt S v-förmig ist. Alternativ kann der Spalt S durch unterschiedliche Stellungen der Kreismesser 16, 17 zueinander auch parallel ausgebildet sein oder einem umgedrehten v entsprechen. Bei der v-förmigen Ausbildung des Spalts S ist der Winkel der Kreismesser 16, 17 grundsätzlich frei wählbar und von den zu bearbeitenden Fischen 11 abhängig. In bevorzugten Ausführungsformen kann der Winkel während des Schneidevorgangs veränderbar sein. In der Fig. 3 zeigen die beiden Pfeile bei der Rotationsachse 24 der Kreismesser 16, 17 schematisch die Verstellbarkeit der Kreismesser 16, 17, wodurch sich die Spaltbreite des Spalts S verändert, was durch die schematischen Pfeile bei dem Spalt S angedeutet ist.

In der Fig. 1 umfasst die Ausführungsform der Vorrichtung 10 die Messeinrichtung 14 zum Erfassen und/oder Bestimmen der Fischanatomie der Fische 11 bzw. fischgrößenrelevanter Daten der Fische 11. Mittels der Steuereinrichtung 19 sind die beiden Kreismesser 16, 17 in Abhängigkeit der erfassten und/oder bestimmten Messdaten steuerbar, nämlich derart, dass die Spaltbreite des Spalts S veränderbar ist. Die Veränderbarkeit des Spalts S wird im Wesentlichen durch eine Längsverschiebung der Kreismesser 16, 17 in der Horizontalen zueinander erreicht. Die detaillierte Ausbildung der Messeinrichtung 14 ist nicht erfindungsrelevant und kann daher in bekannter Weise mechanische, elektronische, optische oder andere bekannte Elemente oder Elementkombinationen aufweisen, die zum Erfassen und/oder Bestimmen der Fischanatomie bzw. von fischgrößenrelevanter Daten geeignet sind. Um die Kreismesser 16, 17 während des Löse- bzw. Rückenschnitts individuell steuern zu können, werden mittels der Messeinrichtung 14 von jedem Fisch 11 die Fischanatomie bzw. die fischgrößenrelevanten Daten erfasst / bestimmt und können zur weiteren Nutzung gespeichert werden. Im Detail können beispielsweise der Schwanzbereich 25 bzw. die Schwanzwurzellage und die Position der Rückenflosse 40 mit einer Lichtschranke erfasst werden. Der Fisch 11 bzw. das Grätengerüst 18 kann vollständig vor dem Lösen / Schneiden vermessen werden. Die einzelnen Messschritte können ergänzend während des Lösens / Schneidens erfolgen. Die Messeinrichtung 14 umfasst insbesondere solche Elemente, mittels denen die Höhe, die Länge und/oder die Breite jedes Fisches 11 und/oder die Lage des Schwanzes 25 und/oder die Lage der Rückenflosse 40 ermittelbar ist, also insbesondere direkt erfassbar und/oder über entsprechende Berechnungsmodelle bestimmbar, ist. Die dadurch ermittelten Daten der Fischanatomie werden mittels geeigneter Bearbeitungs- und/oder Übermittlungsmethoden, z. B. unter Zuhilfenahme einer - in den Figuren nicht im Detail gezeigten - Rechnereinheit, der Steuereinrichtung 19 bereitgestellt, wodurch die erforderliche Einstellbarkeit und die erforderliche Veränderbarkeit der Kreismesser 16, 17 berechnet sowie ausgeführt wird, z. B. ebenfalls unter Zuhilfenahme einer - in den Figuren nicht im Detail gezeigten - Rechnereinheit.

In der Fig. 4 ist die Löseeinrichtung 15 in einer Draufsicht dargestellt. Die veränderbare Spaltbreite des Spalts S ist durch die schematischen Pfeile auf der Drehachse 24 der Kreismesser 16, 17 angedeutet. Die Spaltbreite des Spalts S ist automatisch beim Transport der Fische 11 durch die steuerbeweglichen Kreismesser 16, 17 hindurch, die gegenüberliegend angeordnet sind, veränderbar. Die Kreismesser 16, 17 sind dazu aufeinander zu und voneinander weg bewegbar, wodurch sicher der Spalt S jeweils vergrößert oder verkleinert. Bei der Bearbeitung der Fische 11 schwanzvoraus entspricht die voreingestellte Spaltbreite des Spalts S in der Regel im Wesentlichen der Breite des Schwanzes 25 bzw. der Schwanzflosse; bei dem Hindurchführen der Fische 11 durch den voreingestellten Spalt S verändert sich bedarfsweise die Spaltbreite wodurch aufgrund des breiter werdenden Grätengerüstes 18 regelmäßig eine Vergrößerung des Spalts S ausgebildet wird.

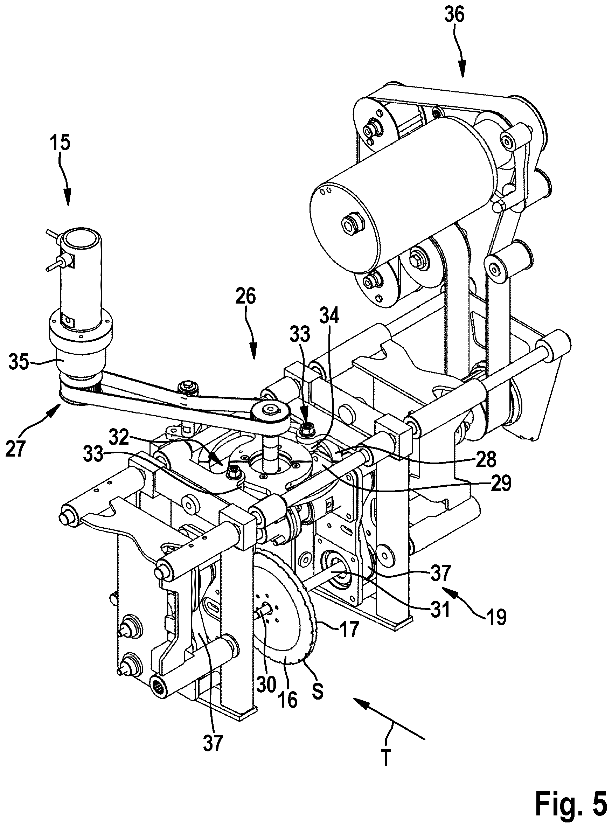

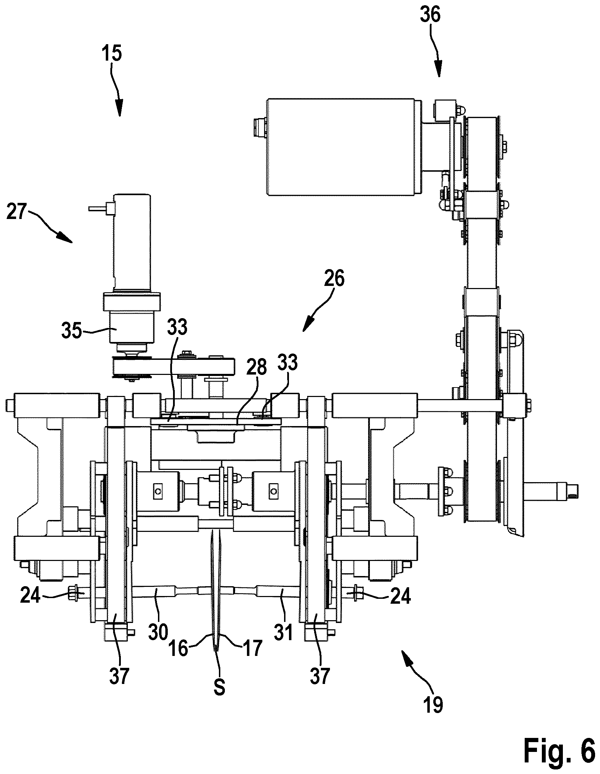

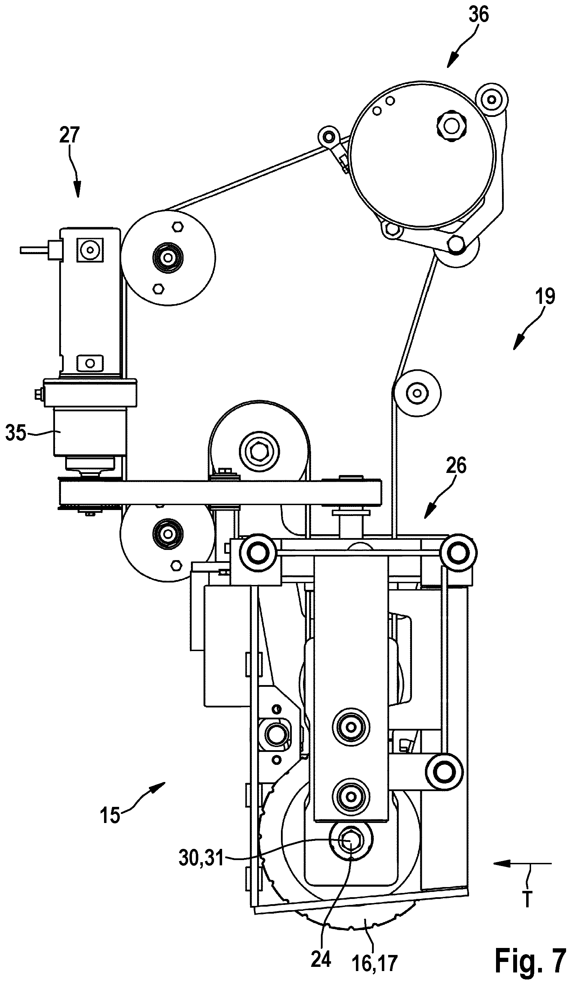

Bevorzugterweise umfasst die Steuereinrichtung 19 eine Kurvensteuerung 26, wobei die Kurvensteuerung 26 eine mittels einer Steuer-Antriebseinheit 27 angetriebene Kurvenscheibe 28 zur Positionsänderung der Kreismesser 16, 17 umfasst. In den Fig. 5 bis Fig. 7 ist die Löseeinrichtung 15 mit der Steuereinrichtung 19 im Detail dargestellt.

Vorzugsweise ist mittels der Kurvenscheibe 28 einerseits ein definierter Spalt S voreinstellbar und andererseits ist während des Lösens des Fleisches 20 vom Grätengerüst 18 der Fische 11 in Abhängigkeit von der erfassten Fischanatomie, insbesondere von der Höhe, der Länge und/oder der Breite der Fische 11, automatisch ein veränderbarer Spalt S bildbar. Dabei sind die beiden Kreismesser 16, 17 zum Freischneiden der Dorsalspeichen 23 ausgebildet und eingerichtet. Die Kurvenscheibe 28 ist durch die Steuer-Antriebseinheit 27 in beide Richtungen entlang einer Rotationsachse der Kurvenscheibe 28 bewegbar ausgebildet. Bei einer Bewegung der Kurvenscheibe 28 ist eine Veränderung der Spaltbreite des Spalts S einrichtbar, indem der Abstand der Kreismesser 16, 17 zueinander verändert wird.

Zur Veränderung der Spaltbreite weist die durch die Steuer-Antriebseinheit 27 angetriebene Kurvenscheibe 28 bevorzugt mindestens eine Umfangssteuerkurve 29 auf, die zur Steuerung des Spalts S eingerichtet ist, wobei einerseits eine statische Ausbildung des Spalts S vor dem Lösen des Fleisches 20 vom Grätengerüst 18 der Fische 11 einstellbar ist und eine dynamische Ausbildung des Spalts S während des Lösens des Fleisches 20 vom Grätengerüst 18 der Fische 11 einstellbar ist, indem jeweils das mindestens eine Kreismesser 16, 17 über ein bewegbar angeordnetes Kreismesseraufnahmeelement 30, 31 mit der Kurvenscheibe 28 in Wirkverbindung steht. Zur Einrichtung der Wirkverbindung zwischen der Kurvenscheibe 28 und den Kreismessern 16, 17 bzw. den Kreismesseraufnahmeelementen 30, 31 sind bevorzugterweise weitere Mittel oder Elemente vorgesehen, die mit der Kurvenscheibe 28 bzw. der Umfangssteuerkurve 29 zusammenwirken. In der erfindungsgemäßen Ausführungsform der Fig. 5 bis Fig. 7 weist die Umfangssteuerkurve 29 mindestens eine Nut 32 auf, in die mindestens ein Abtaster 33, auch bekannt als Bolzenelement, eingreifend angeordnet ist. Vorzugsweise ist zur Steuerung jedes der Kreismesser 16, 17 jeweils eine Nut 32 mit jeweils einem Abtaster 33 vorgesehen. Der Abtaster 33 weist vorzugsweise eine Führungsrolle 34 auf, wodurch eine Bewegung mit geringer Reibung in der Nut 32 gegeben ist. Mittels der Abtaster 33 wird ein Verschieben der Kreismesseraufnahmeelemente 30, 31 bzw. der Kreismesser 16, 17 eingerichtet, was initial durch die Kurvensteuerung 26 bewirkt wird. Zur Übertragung der auftretenden Kräfte können - in den Figuren nicht im Detail gezeigte - Kraftübertragungselemente wie beispielsweise Getriebe vorgesehen sein, die ausgebildet und eingerichtet sind, vorherrschende Kräfte zwischen unterschiedlichen Bauteilen zu übertragen und/oder die Steuerungen von auftretenden Kräften vorzunehmen. Weiterhin kann zur größeren Bandbreite der Einstellmöglichkeit der Spaltbreite des Spalts S, die Steuer-Antriebseinheit 27 einen Stellantrieb 33 umfassen.

Mit dem Stellantrieb 33 kann eine bedarfsgerechte Steuerung der Kurvensteuerung 26 eingerichtet werden, wodurch einerseits eine schnelle und filigranere Voreinstellung des Spalts S gegeben ist und andererseits eine an die Fischanatomie angepasste Veränderung des Spalts S gegeben ist. Auf diese Weise ist eine größere Bandbreite bei der Veränderung der Spaltbreite gegeben, da die Kurvenscheibe 28 schneller, langsamer oder mit einem angepassten Krafteintrag angefahren werden kann. Der Stellantrieb 33 ist vorzugsweise als - in den Figuren nicht im Detail gezeigter - Servomotor ausgebildet. Mit dem Servomotor kann beispielsweise eine Veränderung des Spalts S über die gesamte Schnittführung bei der Gewinnung des Fleisches 20 ausgeführt werden.

Zur Ansteuerung und zum Antrieb der mindestens zwei Kreismesser 16, 17 sind diese bevorzugt von einer einzelnen Kreismesser-Antriebseinheit 36 antreibbar eingerichtet. In den Fig. 5 bis Fig. 7 ist die Kreismesser-Antriebseinheit 36 als Motor ausgebildet. Die Kreismesser-Antriebseinheit 36 ist ausgebildet und eingerichtet, die Kreismesser 16, 17 synchron anzutreiben, wobei jedes der Kreismesser 16, 17 von einem mit der Kreismesser-Antriebseinheit 36 in Wirkverbindung stehendem separaten Antriebsmittel 37 antreibbar ist.

In einer weiteren nicht explizit dargestellten Ausführungsform kann die Vorrichtung 10 weiter eine mit der Messeinrichtung 14 und der Steuereinrichtung 19 elektrisch verbundene Steuereinheit umfassen, die zum Erfassen und/oder zum Verarbeiten von durch die Messeinrichtung 14 erfasster Daten der Fischanatomie ausgebildet und eingerichtet ist, insbesondere der Höhe, der Länge und/oder der Breite der Fische 11, und zur Ansteuerung der Steuer-Antriebseinheit 27 zum Einstellen des Spalts S entsprechend der jeweiligen Fischanatomie, insbesondere der Höhe, der Länge und/oder der Breite der Fische 11, indem die Steuereinheit die Steuer-Antriebseinheit 27 derart ansteuert, den Umlauf der Kurvenscheibe 28 in einem vorgegebenen Winkelgeschwindigkeitsprofil einzustellen.

In einer bevorzugten Ausführungsform umfasst die Vorrichtung 10 eine - in den Figuren nicht dargestellte - Eingabeeinheit, ausgebildet zur Anpassung des Abstands mindestens eines der mindestens zwei Kreismesser 16, 17 zum Transportpfad 13, um die Spaltbreite des Spalts S vor dem Lösen des Fleisches 20 vom Grätengerüst 18 anzupassen und/oder um die Spaltbreite des Spalts S während des Lösens des Fleisches 20 vom Grätengerüst 18 anzupassen, und mindestens eine - in den Figuren ebenfalls nicht dargestellte - Ausgabeeinheit zum Ausgeben der durch die Eingabeeinheit eingegebenen Anpassung des Abstands.

Sämtliche Ausführungsformen, die im Zusammenhang mit den Kreismessern 16, 17, beschrieben wurden, gelten in entsprechender Weise auch für - in den Figuren nicht gezeigte - Bauchmesser, die vorzugsweise als Kreismesser zum Freischneiden der Ventralspeichen 38 oder von anderen zum Grätengerüst 18 gehörenden Gräten oder Grätengerüstabschnitten ausgebildet und eingerichtet sind. Dies gilt auch für das nicht im Detail beschriebene Verfahren zur automatischen Gewinnung von Fleisch 20 von geköpften und entweideten Fischen 11, insbesondere zum Freischneiden der Dorsalspeichen 23.

## Patentansprüche

1. Vorrichtung (10) zur automatischen Gewinnung von Fleisch (20) von geköpften und entweideten Fischen (11), umfassend eine Transporteinrichtung (12) zum Transportieren der Fische (11) in Transportrichtung T entlang eines Transportpfads (13), eine Messeinrichtung (14) zum Erfassen der Fischanatomie der Fische (11) sowie eine Löseeinrichtung (15) zum Lösen des Fleisches (20) vom Grätengerüst (18), wobei die Löseeinrichtung (15) mindestens zwei rotierend angetriebene und steuerbewegliche Kreismesser (16, 17) aufweist, die auf einander gegenüberliegenden Seiten des Transportpfads (13) zur Bildung eines Spalts S beabstandet zueinander angeordnet sind,
wobei die Löseeinrichtung (15) eine Steuereinrichtung (19) umfasst, die eingerichtet ist, die Spaltbreite des Spalts S in Abhängigkeit der durch die Messeinrichtung (14) erfasste Fischanatomie, insbesondere der Höhe, der Länge und/oder der Breite der Fische (11), einzustellen, wobei die Steuereinrichtung (19) ausgebildet ist, die Spaltbreite des Spalts S vor dem Lösen des Fleisches (20) vom Grätengerüst (18) voreinzustellen und wobei die Steuereinrichtung (19) ausgebildet ist, die Spaltbreite des Spalts S während des Lösens des Fleisches (20) vom Grätengerüst (18) zu verändern
**dadurch gekennzeichnet, dass**
die Steuereinrichtung (19) eine Kurvensteuerung (26) umfasst, wobei die Kurvensteuerung (26) eine mittels einer Steuer-Antriebseinheit (27) angetriebene Kurvenscheibe (28) zur Positionsänderung der Kreismesser (16, 17) umfasst, die Vorrichtung weiter umfassend eine mit der Messeinrichtung (14) und der Steuereinrichtung (19) elektrisch verbundene Steuereinheit, ausgebildet und eingerichtet zum Erfassen und/oder Verarbeiten von durch die Messeinrichtung (14) erfasster Daten der Fischanatomie, insbesondere der Höhe, der Länge und/oder der Breite der Fische (11), und zur Ansteuerung der Steuer-Antriebseinheit (27) zum Einstellen des Spalts S entsprechend der jeweiligen Fischanatomie, insbesondere der Höhe, der Länge und/oder der Breite der Fische (11), indem die Steuereinheit die Steuer-Antriebseinheit (27) derart ansteuert, den Umlauf der Kurvenscheibe (28) in einem vorgegebenen Winkelgeschwindigkeitsprofil einzustellen.

2. Vorrichtung (10) nach Anspruch 1, **dadurch gekennzeichnet, dass** die Kreismesser (16, 17) mittels der Steuereinrichtung (19) synchron zueinander und/oder im Wesentlichen orthogonal zum Transportpfad (13) verstellbar eingerichtet sind.

3. Vorrichtung (10) nach Anspruch 1 oder 2, **dadurch gekennzeichnet, dass** die Kreismesser (16, 17) derart zueinander angeordnet sind und/oder derart zueinander einstellbar ausgebildet sind, dass der Spalt S v-förmig ist.

4. Vorrichtung (10) nach einem oder mehreren der Ansprüche 1 bis 3, **dadurch gekennzeichnet, dass** die Kreismesser (16, 17) als Rückenmesser zur Durchführung eines Rückenschnittes zur Ablösung des Rückenfleisches (22) der Fische (11) ausgebildet und eingerichtet sind.

5. Vorrichtung (10) nach einem oder mehreren der Ansprüche 1 bis 4, **dadurch gekennzeichnet, dass** die Transporteinrichtung (12) zum Transportieren der Fische (11) schwanzvoraus in Transportrichtung T entlang des Transportpfads (13) ausgebildet und eingerichtet ist.

6. Vorrichtung (10) nach einem oder mehreren der Ansprüche 1 bis 5, **dadurch gekennzeichnet, dass** mittels der Kurvenscheibe (28) einerseits ein definierter Spalt S voreinstellbar ist und andererseits während des Lösens des Fleisches (20) vom Grätengerüst (18) der Fische (11) in Abhängigkeit von der erfassten Fischanatomie, insbesondere von der Höhe, der Länge und/oder der Breite der Fische (11), automatisch ein veränderbarer Spalt S bildbar ist.

7. Vorrichtung (10) nach einem oder mehreren der Ansprüche 1 bis 6, **dadurch gekennzeichnet, dass** die durch die Steuer-Antriebseinheit (27) angetriebene Kurvenscheibe (28) mindestens eine Umfangssteuerkurve (29) aufweist, die zur Steuerung des Spalts S eingerichtet ist, wobei einerseits eine statische Ausbildung des Spalts S vor dem Lösen des Fleisches (20) vom Grätengerüst (18) der Fische (11) einstellbar ist und eine dynamische Ausbildung des Spalts S während des Lösens des Fleisches (20) vom Grätengerüst (18) der Fische (11) einstellbar ist, indem jeweils das mindestens eine Kreismesser (16, 17) über ein bewegbar angeordnetes Kreismesseraufnahmeelement (30, 31) mit der Kurvenscheibe (28) in Wirkverbindung steht.

8. Vorrichtung (10) nach einem oder mehreren der Ansprüche 1 bis 7, **dadurch gekennzeichnet, dass** die Steuer-Antriebseinheit (27) einen Stellantrieb (35) umfasst.

9. Vorrichtung (10) nach einem oder mehreren der Ansprüche 1 bis 8, **dadurch gekennzeichnet, dass** die mindestens zwei rotierend angetriebenen Kreismesser (16, 17) von einer einzelnen Kreismesser-Antriebseinheit (36) antreibbar eingerichtet sind.

10. Vorrichtung (10) nach Anspruch 9, **dadurch gekennzeichnet, dass** die Kreismesser-Antriebseinheit (36) ausgebildet und eingerichtet ist, die Kreismesser (16, 17) synchron anzutreiben, wobei jedes der Kreismesser (16, 17) von einem mit der Kreismesser-Antriebseinheit (36) in Wirkverbindung stehendem separaten Antriebsmittel (37) antreibbar ist.

11. Vorrichtung (10) nach einem oder mehreren der Ansprüche 1 bis 10, weiter umfassend mindestens eine Eingabeeinheit, ausgebildet zur Anpassung des Abstands mindestens eines der mindestens zwei Kreismesser (16, 17) zum Transportpfad (13), um die Spaltbreite des Spalts S vor dem Lösen des Fleisches (20) vom Grätengerüst (18) anzupassen und/oder um die Spaltbreite des Spalts S während des Lösens des Fleisches (20) vom Grätengerüst (18) anzupassen, und mindestens eine Ausgabeeinheit zum Ausgeben der durch die Eingabeeinheit eingegebenen Anpassung des Abstands.

12. Vorrichtung (10) nach Anspruch 11, **dadurch gekennzeichnet, dass** die Eingabeeinheit ausgebildet und eingerichtet ist, die Anpassung mindestens eines der mindestens zwei Kreismesser (16, 17) zum Transportpfad (13) variabel einzustellen, wobei die Spaltbreite des Spalts S durch jedes der mindestens zwei Kreismesser (16, 17) um maximal ±10 mm anpassbar ist.

13. Vorrichtung (10) nach Anspruch 11 oder 12, **dadurch gekennzeichnet, dass** die Eingabeeinheit ausgebildet ist, fischartenabhängig Schneidprofile einzustellen, um die Spaltbreite des Spalts S entsprechend der Fischart vor und/oder während des Lösens des Fleisches (20) vom Grätengerüst (18) der Fische (11) anzupassen, wobei eine variable Anpassung des Spalts S einstellbar ist.

14. Verfahren zur automatischen Gewinnung von Fleisch (20) von geköpften und entweideten Fischen (11), umfassend die Schritte:
- Transportieren der Fische (11) in Transportrichtung T entlang eines Transportpfads (13) mittels einer Transporteinrichtung (12),
- Erfassen der Fischanatomie, insbesondere der Höhe, der Länge und/oder der Breite der Fische (11), mittels einer Messeinrichtung (14),
- Lösen des Fleisches (20) vom Grätengerüst (18) mittels einer Löseeinrichtung (15), wobei die Löseeinrichtung (15) mindestens zwei rotierend angetriebene und steuerbewegliche Kreismesser (16, 17) aufweist, die auf einander gegenüberliegenden Seiten des Transportpfads (13) zur Bildung eines Spalts S beabstandet zueinander angeordnet sind,
- Einstellen der Spaltbreite des Spalts S in Abhängigkeit der durch die Messeinrichtung (14) erfasste Fischanatomie, insbesondere der Höhe, der Länge und/oder der Breite der Fische (11), mittels einer Steuereinrichtung (19),
- Voreinstellen der Spaltbreite des Spalts S vor dem Lösen des Fleisches (20) vom Grätengerüst (18) mittels der Steuereinrichtung (19) und Verändern der Spaltbreite des Spalts S während des Lösens des Fleisches (20) vom Grätengerüst (18) mittels der Steuereinrichtung (19),
**gekennzeichnet durch**
- Positionsändern der Kreismesser (16, 17) durch Antreiben einer die Steuereinrichtung (19) umfassenden Kurvenscheibe (28) mittels einer Steuer-Antriebseinheit (27),
- Erfassen und/oder Verarbeiten von durch die Messeinrichtung (14) gemessener Daten der Fischanatomie, insbesondere der Höhe, der Länge und/oder der Breite der Fische (11), mittels einer mit der Messeinrichtung (14) und der Steuereinrichtung (19) elektrisch verbundenen Steuereinheit, und zur Ansteuerung der Steuer-Antriebseinheit (27) durch die Steuereinheit zum Einstellen des Spalts S entsprechend der jeweiligen Fischanatomie, insbesondere der Höhe, der Länge und/oder der Breite der Fische (11), durch Einstellung des Umlaufs der Kurvenscheibe (28) in einem vorgegebenen Winkelgeschwindigkeitsprofil.

15. Verfahren nach Anspruch 14, **gekennzeichnet durch** Verstellen der Kreismesser (16, 17) synchron zueinander und/oder im Wesentlichen orthogonal zum Transportpfad (13) mittels der Steuereinrichtung (19).

16. Verfahren nach Anspruch 14 oder 15, **gekennzeichnet durch** Transportieren der Fische (11) schwanzvoraus in Transportrichtung T entlang des Transportpfads (13) mittels der Transporteinrichtung (12).

17. Verfahren nach einem oder mehreren der Ansprüche 14 bis 16, **gekennzeichnet durch** einerseits Voreinstellen eines definierten Spalts S mittels der Kurvenscheibe (28) und andererseits automatisches Bilden eines veränderbaren Spalts S mittels der Kurvenscheibe (28) während des Lösens des Fleisches (20) vom Grätengerüst (18) der Fische (11) in Abhängigkeit von der Fischanatomie, insbesondere von der Höhe, der Länge und/oder der Breite der Fische (11).

18. Verfahren nach einem oder mehreren der Ansprüche 14 bis 17, **gekennzeichnet durch** Antreiben der Kurvenscheibe (28) durch die Steuer-Antriebseinheit (27) und einerseits statisches Einstellen des Spalts S vor dem Lösen des Fleisches (20) vom Grätengerüst (18) der Fische (11) und andererseits dynamisches Einstellen des Spalts S während des Lösens des Fleisches (20) vom Grätengerüst (18) der Fische (11) mittels mindestens einer Umfangssteuerkurve (29) der Kurvenscheibe (28) durch Bewegen des mindestens einen Kreismessers (16, 17) über jeweils ein bewegbar angeordnetes Kreismesseraufnahmeelement (30, 31).

19. Verfahren nach einem oder mehreren der Ansprüche 14 bis 18, **gekennzeichnet durch** Antreiben der mindestens zwei rotierend angetriebenen Kreismesser (16, 17) von einer einzelnen Kreismesser-Antriebseinheit (36).

20. Verfahren nach Anspruch 19, **gekennzeichnet durch** synchrones Antreiben jedes der Kreismesser (16, 17) mittels eines separaten Antriebsmittels (37) der Kreismesser-Antriebseinheit (36).

21. Verfahren nach einem oder mehreren der Ansprüche 14 bis 20, **gekennzeichnet durch** Anpassung des Abstands mindestens eines der mindestens zwei Kreismesser (16, 17) zum Transportpfad (13) mittels mindestens einer Eingabeeinheit, durch Anpassen der Spaltbreite des Spalts S vor dem Lösen des Fleisches (20) vom Grätengerüst (18) und/oder durch Anpassen der Spaltbreite des Spalts S während des Lösens des Fleisches (20) vom Grätengerüst (18), und Ausgeben der durch die Eingabeeinheit eingegebenen Anpassung des Abstands mittels mindestens einer Ausgabeeinheit.

22. Verfahren nach Anspruch 21, **gekennzeichnet durch** variables Einstellen der Anpassung mindestens eines der mindestens zwei Kreismesser (16, 17) zum Transportpfad (13), wobei die Spaltbreite des Spalts S durch jedes der mindestens zwei Kreismesser (16, 17) um maximal ±10 mm angepasst wird.

23. Verfahren nach Anspruch 21 oder 22, **gekennzeichnet durch** variable Anpassung der Spaltbreite des Spalts S mittels fischartenabhängiger Schneidprofile der Eingabeeinheit vor und/oder während des Lösens des Fleisches (20) vom Grätengerüst (18) der Fische (11).

## Claims

1. Apparatus (10) for automatically recovering meat (20) from headed and gutted fish (11), comprising a transport device (12) for transporting the fish (11) along a transport path (13) in transport direction T, a measuring device (14) for detecting the anatomy of the fish (11), and a detaching device (15) for detaching the meat (20) from the bone structure (18), wherein the detaching device (15) comprises at least two rotatingly driven and controllably moveable circular knives (16, 17) which are spaced apart from each other on mutually opposing sides of the transport path (13) to form a gap S, wherein the detaching device (15) comprises a control device (19), which is set up to adjust the width of the gap S depending on the fish anatomy detected by the measuring device (14), in particular the height, length and/or width of the fish (11), wherein the control device (19) is configured to pre-adjust the width of the gap S before the meat (20) is detached from the bone structure (18) and wherein the control device (19) is configured to vary the width of the gap S while the meat (20) is being detached from the bone structure (18),
**characterised in that**
the control device (19) comprises a cam control (26), wherein the cam control (26) comprises a cam disc (28) driven by means of a control drive unit (27) for changing the position of the circular knives (16, 17), the apparatus further comprising a control unit, electrically connected to the measuring device (14) and the control device (19), which is configured and adapted to detect and/or process the fish anatomy data detected by the measuring device (14), in particular the height, length and/or width of the fish (11), and to actuate the control drive unit (27) for adjusting the gap S according to the respective fish anatomy, in particular the height, length and/or width of the fish (11), **in that** the control unit actuates the control drive unit (27) in such a manner as to adjust the circulation of the cam disc (28) in a predetermined angular velocity profile.

2. Apparatus (10) according to claim 1, **characterised in that** the circular knives (16, 17) are set up to be adjustable synchronously with each other and/or substantially orthogonal to the transport path (13) by means of the control device (19).

3. Apparatus (10) according to claim 1 or 2, **characterised in that** the circular knives (16, 17) are arranged relative to each other and/or are configured to be adjustable relative to each other in such a manner that the gap S is v-shaped.

4. Apparatus (10) according to one or more of claims 1 to 3, **characterised in that** the circular knives (16, 17) are configured and adapted as dorsal knives to perform a dorsal cut for detaching the dorsal meat (22) of the fish (11).

5. Apparatus (10) according to one or more of claims 1 to 4, **characterised in that** the transport device (12) is configured and adapted to transport the fish (11) tail-first along the transport path (13) in transport direction T.

6. Apparatus (10) according to one or more of claims 1 to 5, **characterised in that**, on the one hand, a defined gap S can be preset by means of the cam disc (28) and, on the other hand, a variable gap S can be formed automatically as a function of the fish anatomy detected, in particular the height, length and/or width of the fish (11), while the meat (20) is being detached from the bone structure (18) of the fish (11).

7. Apparatus (10) according to one or more of claims 1 to 6, **characterised in that** the cam disc (28) driven by the control drive unit (27) comprises at least one circumferential cam (29) which is set up to control the gap S, wherein, on the one hand, a static formation of the gap S can be adjusted before the meat (20) is detached from the bone structure (18) of the fish (11) and a dynamic formation of the gap S can be adjusted while the meat (20) is being detached from the bone structure (18) of the fish (11), **in that** in each case the at least one circular knife (16, 17) is operatively connected to the cam disc (28) via a movably arranged circular knife receiving element (30, 31).

8. Apparatus (10) according to one or more of claims 1 to 7, **characterised in that** the control drive unit (27) comprises an adjusting drive (35).

9. Apparatus (10) according to one or more of claims 1 to 8, **characterised in that** the at least two rotatingly driven circular knives (16, 17) are set up to be drivable by a single circular knife drive unit (36).

10. Apparatus (10) according to claim 9, **characterised in that** the circular knife drive unit (36) is configured and adapted to drive the circular knives (16, 17) synchronously, wherein each of the circular knives (16, 17) is drivable by a separate drive means (37) which is operatively connected to the circular knife drive unit (36).

11. Apparatus (10) according to one or more of claims 1 to 10, further comprising at least one input unit, configured to adjust the distance of at least one of the at least two circular knives (16, 17) to the transport path (13) in order to adjust the width of the gap S before the meat (20) is detached from the bone structure (18) and/or to adjust the width of the gap S while the meat (20) is being detached from the bone structure (18), and at least one output unit to output the adjustment of the distance entered by the input unit.

12. Apparatus (10) according to claim 11, **characterised in that** the input unit is configured and adapted to variably set the adjustment of at least one of the at least two circular knives (16, 17) to the transport path (13), wherein the width of the gap S is adjustable by each of the at least two circular knives (16, 17) by a maximum of ±10 mm.

13. Apparatus (10) according to claim 11 or 12, **characterised in that** the input unit is configured to set cutting profiles depending on the fish species in order to adjust the width of the gap S according to the fish species before and/or during detachment of the meat (20) from the bone structure (18) of the fish (11), wherein variable adjustment of the gap S can be set.

14. Method for automatically recovering meat (20) from headed and gutted fish (11), comprising the steps:
- transporting the fish (11) along a transport path (13) in transport direction T by means of a transport device (12),
- detecting the fish anatomy, in particular the height, length and/or width of the fish (11), by means of a measuring device (14),
- detaching the meat (20) from the bone structure (18) by means of a detaching device (15), wherein the detaching device (15) comprises at least two rotatingly driven and controllably moveable circular knives (16, 17) which are spaced apart from each other on mutually opposing sides of the transport path (13) to form a gap S,
- adjusting the width of the gap S depending on the fish anatomy detected by the measuring device (14), in particular the height, length and/or width of the fish (11), by means of a control device (19),
- pre-adjusting the width of the gap S by means of the control device (19) before the meat (20) is detached from the bone structure (18), and changing the width of the gap S by means of the control device (19) while the meat (20) is being detached from the bone structure (18),
**characterised by**
- position of the circular knives (16, 17) by driving a cam disc (28) which comprises the control device (19) by means of a control drive unit (27),
- detecting and/or processing the fish anatomy data measured by the measuring device (14), in particular the height, length and/or width of the fish (11), by means of a control drive unit, electrically connected to the measuring device (14) and the control device (19), and actuating of the control drive unit (27) by the control unit to adjust the gap S according to the respective fish anatomy, in particular the height, length and/or width of the fish (11), by adjusting the circulation of the cam disc (28) in a predetermined angular velocity profile.

15. Method according to claim 14, **characterised by** adjusting the circular knives (16, 17) synchronously with each other and/or substantially orthogonal to the transport path (13) by means of the control device (19).

16. Method according to claim 14 or 15, **characterised by** transporting the fish (11) tail-first along the transport path (13) in transport direction T by means of the transport device (12).

17. Method according to one or more of claims 14 to 16, **characterised by**, on the one hand, pre-setting a defined gap S by means of the cam disc (28) and, on the other hand, automatically forming a variable gap S by means of the cam disc (28) while detaching the meat (20) from the bone structure (18) of the fish (11) depending on the fish anatomy, in particular the height, length and/or width of the fish (11).

18. Method according to one or more of claims 14 to 17, **characterised by** driving of the cam disc (28) by the control drive unit (27) and, on the one hand, statically adjusting the gap S before detaching the meat (20) from the bone structure (18) of the fish (11) and, on the other hand, dynamically adjusting the gap S while the meat (20) is being detached from the bone structure (18) of the fish (11) by means of at least one circumferential cam (29) of the cam disc (28) by moving the at least one circular knife (16, 17) via in each case a movably arranged circular knife receiving element (30, 31).

19. Method according to one or more of claims 14 to 18, **characterised by** driving the at least two rotatingly driven circular knives (16, 17) by a single circular knife drive unit (36).

20. Method according to claim 19, **characterised by** synchronously driving each of the circular knives (16, 17) by means of a separate drive means (37) of the circular knife drive unit (36).

21. Method according to one or more of claims 14 to 20, **characterised by** adjusting the distance of at least one of the at least two circular knives (16, 17) to the transport path (13) by means of at least one input unit, by adjusting the width of the gap S before the meat (20) is detached from the bone structure (18) and/or by adjusting the width of the gap S while the meat (20) is being detached from the bone structure (18), and outputting the adjustment of the distance entered by the input unit by means of at least one output unit.

22. Method according to claim 21, **characterised by** variably setting the adjustment of at least one of the at least two circular knives (16, 17) to the transport path (13), wherein the width of the gap S is adjusted by each of the at least two circular knives (16, 17) by a maximum of ±10 mm.

23. Method according to claim 21 or 22, **characterised by** variable adjustment of the width of the gap S by means of cutting profiles depending on the fish species of the input unit before and/or during detachment of the meat (20) from the bone structure (18) of the fish (11).

## Revendications

1. Dispositif (10) pour l'extraction automatique de la chair (20) de poissons (11) étêtés et éviscérés, comprenant un appareil de transport (12) pour transporter les poissons (11) dans la direction de transport T le long d'un chemin de transport (13), un appareil de mesure (14) pour acquérir l'anatomie de poisson des poissons (11) ainsi qu'un appareil de détachement (15) pour détacher la chair (20) de la structure d'arêtes (18), l'appareil de détachement (15) présentant au moins deux lames circulaires (16, 17) entraînées en rotation et mobiles de manière commandée, qui sont agencées à distance l'une de l'autre sur des côtés opposés du chemin de transport (13) pour former un interstice S,
l'appareil de détachement (15) comprenant un appareil de commande (19) qui est adapté pour régler la largeur d'interstice de l'interstice S en fonction de l'anatomie de poisson acquise par l'appareil de mesure (14), notamment de la hauteur, de la longueur et/ou de la largeur des poissons (11), l'appareil de commande (19) étant configuré pour prérégler la largeur d'interstice de l'interstice S avant de détacher la chair (20) de la structure d'arêtes (18) et l'appareil de commande (19) étant configuré pour modifier la largeur d'interstice de l'interstice S pendant le détachement de la chair (20) de la structure d'arêtes (18),
**caractérisé en ce que**
l'appareil de commande (19) comprend une commande à came (26), la commande à came (26) comprenant un disque à came (28) entraîné au moyen d'une unité d'entraînement de commande (27) pour modifier la position des lames circulaires (16, 17),
le dispositif comprenant en outre une unité de commande reliée électriquement à l'appareil de mesure (14) et à l'appareil de commande (19), configurée et adaptée pour acquérir et/ou traiter des données de l'anatomie de poisson, notamment la hauteur, la longueur et/ou la largeur des poissons (11), acquises par l'appareil de mesure (14), et pour commander l'unité d'entraînement de commande (27) pour régler l'interstice S conformément à l'anatomie de poisson respective, notamment à la hauteur, la longueur et/ou la largeur des poissons (11), par le fait que l'unité de commande commande l'unité d'entraînement de commande (27) de manière à régler la circulation du disque à came (28) dans un profil de vitesse angulaire prédéfini.

2. Dispositif (10) selon la revendication 1, **caractérisé en ce que** les lames circulaires (16, 17) sont adaptées de manière à pouvoir être réglées de manière synchrone l'une par rapport à l'autre et/ou de manière essentiellement orthogonale par rapport au chemin de transport (13) au moyen de l'appareil de commande (19).

3. Dispositif (10) selon la revendication 1 ou 2, **caractérisé en ce que** les lames circulaires (16, 17) sont agencées l'une par rapport à l'autre et/ou sont configurées pour être réglables l'une par rapport à l'autre de telle sorte que l'interstice S est en forme de V.

4. Dispositif (10) selon une ou plusieurs des revendications 1 à 3, **caractérisé en ce que** les lames circulaires (16, 17) sont configurées et adaptées en tant que lames dorsales pour réaliser une coupe dorsale afin de détacher la chair dorsale (22) des poissons (11).

5. Dispositif (10) selon une ou plusieurs des revendications 1 à 4, **caractérisé en ce que** l'appareil de transport (12) est configuré et adapté pour transporter les poissons (11) queue en avant dans la direction de transport T le long du chemin de transport (13).

6. Dispositif (10) selon une ou plusieurs des revendications 1 à 5, **caractérisé en ce qu'**au moyen du disque à came (28), d'une part un interstice S défini peut être préréglé et, d'autre part, un interstice S modifiable peut être formé automatiquement pendant le détachement de la chair (20) de la structure d'arêtes (18) des poissons (11) en fonction de l'anatomie de poisson acquise, notamment de la hauteur, de la longueur et/ou de la largeur des poissons (11).

7. Dispositif (10) selon une ou plusieurs des revendications 1 à 6, **caractérisé en ce que** le disque à came (28) entraîné par l'unité d'entraînement de commande (27) présente au moins une came de commande périphérique (29) qui est adaptée pour commander l'interstice S ; d'une part, une configuration statique de l'interstice S avant le détachement de la chair (20) de la structure d'arêtes (18) des poissons (11) pouvant être réglée et une configuration dynamique de l'interstice S pendant le détachement de la chair (20) de la structure d'arêtes (18) des poissons (11) pouvant être réglée, par le fait que respectivement l'au moins une lame circulaire (16, 17) est en liaison active avec le disque à came (28) par l'intermédiaire d'un élément de réception de lame circulaire (30, 31) agencé de manière mobile.

8. Dispositif (10) selon une ou plusieurs des revendications 1 à 7, **caractérisé en ce que** l'unité d'entraînement de commande (27) comprend un servo-entraînement (35).

9. Dispositif (10) selon une ou plusieurs des revendications 1 à 8, **caractérisé en ce que** les au moins deux lames circulaires (16, 17) entraînées en rotation sont adaptées pour pouvoir être entraînées par une seule unité d'entraînement de lames circulaires (36).

10. Dispositif (10) selon la revendication 9, **caractérisé en ce que** l'unité d'entraînement de lames circulaires (36) est configurée et adaptée pour entraîner les lames circulaires (16, 17) de manière synchrone, chacune des lames circulaires (16, 17) pouvant être entraînée par un moyen d'entraînement séparé (37) en liaison active avec l'unité d'entraînement de lames circulaires (36).

11. Dispositif (10) selon une ou plusieurs des revendications 1 à 10, comprenant en outre au moins une unité d'entrée configurée pour ajuster la distance d'au moins l'une des au moins deux lames circulaires (16, 17) par rapport au chemin de transport (13) afin d'ajuster la largeur d'interstice de l'interstice S avant le détachement de la chair (20) de la structure d'arêtes (18) et/ou afin d'ajuster la largeur d'interstice de l'interstice S pendant le détachement de la chair (20) de la structure d'arêtes (18), et au moins une unité de sortie pour émettre l'ajustement de la distance entré par l'unité d'entrée.

12. Dispositif (10) selon la revendication 11, **caractérisé en ce que** l'unité d'entrée est configurée et adaptée pour régler de manière variable l'ajustement d'au moins l'une des au moins deux lames circulaires (16, 17) par rapport au chemin de transport (13), la largeur d'interstice de l'interstice S pouvant être ajustée de ±10 mm au maximum par chacune des au moins deux lames circulaires (16, 17).

13. Dispositif (10) selon la revendication 11 ou 12, **caractérisé en ce que** l'unité d'entrée est configurée pour régler des profils de coupe en fonction de l'espèce de poisson, afin d'ajuster la largeur d'interstice de l'interstice S conformément à l'espèce de poisson avant et/ou pendant le détachement de la chair (20) de la structure d'arêtes (18) des poissons (11), un ajustement variable de l'interstice S étant réglable.

14. Procédé pour l'extraction automatique de la chair (20) de poissons (11) étêtés et éviscérés, comprenant les étapes :
- le transport des poissons (11) dans la direction de transport T le long d'un chemin de transport (13) au moyen d'un appareil de transport (12),
- l'acquisition de l'anatomie de poisson, notamment de la hauteur, de la longueur et/ou de la largeur des poissons (11), au moyen d'un appareil de mesure (14),
- le détachement de la chair (20) de la structure d'arêtes (18) au moyen d'un appareil de détachement (15), l'appareil de détachement (15) présentant au moins deux lames circulaires (16, 17) entraînées en rotation et mobiles de manière commandée, qui sont agencées à distance l'une de l'autre sur des côtés opposés du chemin de transport (13) pour former un interstice S,
- le réglage de la largeur d'interstice de l'interstice S en fonction de l'anatomie de poisson acquise par l'appareil de mesure (14), notamment de la hauteur, de la longueur et/ou de la largeur des poissons (11), au moyen d'un appareil de commande (19),
- le préréglage de la largeur d'interstice de l'interstice S avant le détachement de la chair (20) de la structure d'arêtes (18) au moyen de l'appareil de commande (19) et la modification de la largeur d'interstice de l'interstice S pendant le détachement de la chair (20) de la structure d'arêtes (18) au moyen de l'appareil de commande (19),
**caractérisé par**
- la modification de position des lames circulaires (16, 17) par entraînement d'un disque à came (28) comprenant l'appareil de commande (19) au moyen d'une unité d'entraînement de commande (27),
- l'acquisition et/ou le traitement de données de l'anatomie de poisson, notamment de la hauteur, de la longueur et/ou de la largeur des poissons (11), mesurées par l'appareil de mesure (14), au moyen d'une unité de commande reliée électriquement à l'appareil de mesure (14) et à l'appareil de commande (19), et pour la commande de l'unité d'entraînement de commande (27) par l'unité de commande pour le réglage de l'interstice S conformément à l'anatomie de poisson respective, notamment à la hauteur, la longueur et/ou la largeur des poissons (11), par réglage de la circulation du disque à came (28) dans un profil de vitesse angulaire prédéterminé.

15. Procédé selon la revendication 14, **caractérisé par** le réglage des lames circulaires (16, 17) de manière synchrone l'une par rapport à l'autre et/ou de manière essentiellement orthogonale par rapport au chemin de transport (13) au moyen de l'appareil de commande (19).

16. Procédé selon la revendication 14 ou 15, **caractérisé par** le transport des poissons (11) queue en avant dans la direction de transport T le long du chemin de transport (13) au moyen de l'appareil de transport (12).

17. Procédé selon une ou plusieurs des revendications 14 à 16, **caractérisé par** d'une part le préréglage d'un interstice S défini au moyen du disque à came (28) et d'autre part la formation automatique d'un interstice S modifiable au moyen du disque à came (28) pendant le détachement de la chair (20) de la structure d'arêtes (18) des poissons (11) en fonction de l'anatomie de poisson, notamment de la hauteur, de la longueur et/ou de la largeur des poissons (11).

18. Procédé selon une ou plusieurs des revendications 14 à 17, **caractérisé par** l'entraînement du disque à came (28) par l'unité d'entraînement de commande (27) et, d'une part, le réglage statique de l'interstice S avant le détachement de la chair (20) de la structure d'arêtes (18) des poissons (11) et, d'autre part, le réglage dynamique de l'interstice S pendant le détachement de la chair (20) de la structure d'arêtes (18) des poissons (11) au moyen d'au moins une came de commande périphérique (29) du disque à came (28) par déplacement de l'au moins une lame circulaire (16, 17) par l'intermédiaire d'un élément de réception de lame circulaire (30, 31) agencé de manière mobile.

19. Procédé selon une ou plusieurs des revendications 14 à 18, **caractérisé par** l'entraînement des au moins deux lames circulaires (16, 17) entraînées en rotation par une seule unité d'entraînement de lames circulaires (36).

20. Procédé selon la revendication 19, **caractérisé par** l'entraînement synchrone de chacune des lames circulaires (16, 17) au moyen d'un moyen d'entraînement séparé (37) de l'unité d'entraînement de lames circulaires (36).

21. Procédé selon une ou plusieurs des revendications 14 à 20, **caractérisé par** l'ajustement de la distance d'au moins l'une des au moins deux lames circulaires (16, 17) par rapport au chemin de transport (13) au moyen d'au moins une unité d'entrée, par ajustement de la largeur d'interstice de l'interstice S avant le détachement de la chair (20) de la structure d'arêtes (18) et/ou par ajustement de la largeur d'interstice de l'interstice S pendant le détachement de la chair (20) de la structure d'arêtes (18), et émission de l'ajustement de la distance entrée par l'unité d'entrée au moyen d'au moins une unité de sortie.

22. Procédé selon la revendication 21, **caractérisé par** le réglage variable de l'ajustement d'au moins l'une des au moins deux lames circulaires (16, 17) par rapport au chemin de transport (13), la largeur d'interstice de l'interstice S étant ajustée de ±10 mm au maximum par chacune des au moins deux lames circulaires (16, 17).

23. Procédé selon la revendication 21 ou 22, **caractérisé par** l'ajustement variable de la largeur d'interstice de l'interstice S au moyen de profils de coupe dépendant de l'espèce de poisson de l'unité d'entrée avant et/ou pendant le détachement de la chair (20) de la structure d'arêtes (18) des poissons (11).
